(19) Europäisches Patentamt
European Patent Office
Office européen des brevets

(11) EP 3 937 499 A1

(12) EUROPEAN PATENT APPLICATION
published in accordance with Art. 153(4) EPC

(43) Date of publication:
12.01.2022 Bulletin 2022/02

(51) Int Cl.:
H04N 19/597 (2014.01)   H04N 19/85 (2014.01)

(21) Application number: 20765701.6

(22) Date of filing: 20.02.2020

(86) International application number:
PCT/JP2020/006790

(87) International publication number:
WO 2020/179473 (10.09.2020 Gazette 2020/37)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 05.03.2019  JP 2019039534

(71) Applicant: Sony Group Corporation
Tokyo 108-0075 (JP)

(72) Inventor: ARAKI, Yuichi
Tokyo 108-0075 (JP)

(74) Representative: MFG Patentanwälte
Meyer-Wildhagen Meggle-Freund
Gerhard PartG mbB
Amalienstraße 62
80799 München (DE)

(54) IMAGE PROCESSING DEVICE, IMAGE GENERATION METHOD, AND IMAGE PROCESSING METHOD

(57) The present technology relates to an image processing device, an image generation method, and an image processing method that can be adapted to real-time processing while reducing the amount of data.

The image processing device generates a first packing image obtained by packing in one frame a first object image in which an object faces a first direction and a second object image in which the object faces a second direction different from the first direction among a plurality of images in which the object is imaged in different directions in such a way that a resolution of the first object image is higher than a resolution of the second object image, and further generates a second packing image obtained by packing in one frame a third object image in which the object faces a third direction and a fourth object image in which the object faces a fourth direction among the plurality of images in such a way that a resolution of the third object image is higher than a resolution of the fourth object image. The present technology can be applied to, for example, an image processing device or the like that performs a volumetric reproduction process using a plurality of pieces of texture images.

FIG. 2

**Description**

TECHNICAL FIELD

The present technology relates to an image processing device, an image generation method, and an image processing method, and in particular, an image processing device, an image generation method, and an image processing method that can be adapted to real-time processing while reducing the amount of data.

BACKGROUND ART

There is a technology that provides a free-viewpoint image by generating a 3D model of a subject from moving images captured from multiple viewpoints and generating a virtual viewpoint image of the 3D model according to any viewing/listening position. This technology is also called a volumetric capture technology.
If captured images from all the viewpoints that have been captured are transmitted to the reproduction side, the amount of data transmitted becomes enormous. Therefore, only the moving images of some viewpoints are selected and packed according to the viewing/listening position during reproduction so as to be transmitted to the reproduction side (see, for example, Patent Document 1).

CITATION LIST

PATENT DOCUMENT

Patent Document 1: International Publication No. 2018/150933

SUMMARY OF THE INVENTION

PROBLEMS TO BE SOLVED BY THE INVENTION

However, for example, in the technology of Patent Document 1, it is necessary to perform processing of selecting, packing, and transmitting moving images of viewpoints to be transmitted to the reproduction side each time according to the viewing/listening position at the time of reproduction, and it is difficult to deal with real-time processing in some cases.
The present technology has been made in view of such a situation, and makes it possible to adapt to real-time processing while reducing the amount of data.

SOLUTIONS TO PROBLEMS

An image processing device according to a first aspect of the present technology includes a generation unit that generates a first packing image obtained by packing in one frame a first object image in which an object faces a first direction and a second object image in which the object faces a second direction different from the first direction among a plurality of images in which the object is imaged in different directions in such a way that a resolution of the first object image is higher than a resolution of the second object image, the generation unit further generating a second packing image obtained by packing in one frame a third object image in which the object faces a third direction different from the first direction and a fourth object image in which the object faces a fourth direction different from the third direction among a plurality of images in which the object is imaged in different directions in such a way that a resolution of the third object image is higher than a resolution of the fourth object image.
An image generation method according to a first aspect of the present technology includes generating a plurality of packing images by an image processing device through a first generation step and a second generation step, in which in the first generation step, a first packing image obtained by packing in one frame a first object image in which an object faces a first direction and a second object image in which the object faces a second direction different from the first direction among a plurality of images in which the object is imaged in different directions in such a way that a resolution of the first object image is higher than a resolution of the second object image is generated, and in the second generation step, a second packing image obtained by packing in one frame a third object image in which the object faces a third direction different from the first direction and a fourth object image in which the object faces a fourth direction different from the third direction among a plurality of images in which the object is imaged in different directions in such a way that a resolution of the third object image is higher than a resolution of the fourth object image is generated.
In the first aspect of the present technology, a first packing image is generated, the first packing image being obtained by packing in one frame a first object image in which an object faces a first direction and a second object image in which the object faces a second direction different from the first direction among a plurality of images in which the object is imaged in different directions in such a way that a resolution of the first object image is higher than a resolution of the second object image, and a second packing image is generated, the second packing image being obtained by packing in one frame a third object image in which the object faces a third direction different from the first direction and a fourth object image in which the object faces a fourth direction different from the third direction among a plurality of images in which the object is imaged in different directions in such a way that a resolution of the third object image is higher than a resolution of the fourth object image.

An image processing device according to a second aspect of the present technology includes a rendering unit that acquires a first packing image or a second packing image and generates as a display image a virtual viewpoint image in which an object is viewed from a viewpoint of a viewer/listener, the first packing image being a packing image obtained by packing in one frame a first object image in which the object faces a first direction and a second object image in which the object faces a second direction different from the first direction among a plurality of images in which the object is imaged in different directions in such a way that a resolution of the first object image is higher than a resolution of the second object image, and the second packing image being a packing image obtained by packing in one frame a third object image in which the object faces a third direction different from the first direction and a fourth object image in which the object faces a fourth direction different from the third direction among a plurality of images in which the object is imaged in different directions in such a way that a resolution of the third object image is higher than a resolution of the fourth object image.

An image processing method according to the second aspect of the present technology includes acquiring, by an image processing device, a first packing image or a second packing image and generating as a display image a virtual viewpoint image in which an object is viewed from a viewpoint of a viewer/listener, the first packing image being a packing image obtained by packing in one frame a first object image in which the object faces a first direction and a second object image in which the object faces a second direction different from the first direction among a plurality of images in which the object is imaged in different directions in such a way that a resolution of the first object image is higher than a resolution of the second object image, and the second packing image being a packing image obtained by packing in one frame a third object image in which the object faces a third direction different from the first direction and a fourth object image in which the object faces a fourth direction different from the third direction among a plurality of images in which the object is imaged in different directions in such a way that a resolution of the third object image is higher than a resolution of the fourth object image.

In the second aspect of the present technology, a first packing image or a second packing image is acquired, and a virtual viewpoint image in which an object viewed from a viewpoint of a viewer/listener is generated as a display image. The first packing image is a packing image obtained by packing in one frame a first object image in which the object faces a first direction and a second object image in which the object faces a second direction different from the first direction among a plurality of images in which the object is imaged in different directions in such a way that a resolution of the first object image is higher than a resolution of the second object image, and a second packing image is a packing image obtained by packing in one frame a third object image in which the object faces a third direction different from the first direction and a fourth object image in which the object faces a fourth direction different from the third direction among a plurality of images in which the object is imaged in different directions in such a way that a resolution of the third object image is higher than a resolution of the fourth object image.

Note that each of the image processing devices according to the first and second aspects of the present technology can be realized by causing a computer to execute a program. The program to be executed by the computer can be provided by transmitting the program through a transmission medium or by recording the program on a recording medium.

The image processing device may be an independent device, or may be an internal block constituting one device.

BRIEF DESCRIPTION OF DRAWINGS

Fig. 1 is a diagram illustrating an overview of an image processing system to which the present technology is applied.
Fig. 2 is a block diagram illustrating a configuration example of the image processing system to which the present technology is applied.
Fig. 3 is a view schematically illustrating a positional relationship between a plurality of imaging devices and a subject.
Fig. 4 is a diagram illustrating examples of a texture image and a depth image.
Fig. 5 is a diagram explaining assumed virtual viewpoints.
Fig. 6 is a diagram illustrating examples of nine pieces of object images.
Fig. 7 is a diagram illustrating an example of mapping an object image.
Fig. 8 is a diagram illustrating an object image mapped to each layout position.
Fig. 9 is a diagram illustrating examples of four pieces of packing images generated with respect to assumed virtual viewpoints in four directions.

Fig. 10 is a diagram illustrating switching of bitstreams of four pieces of packing images.

Fig. 11 is a diagram illustrating another layout example of the packing image.

Fig. 12 is a diagram illustrating an arrangement example of imaging devices and an example of generating packing images.

Fig. 13 is a diagram illustrating a packing image selection process performed by an image selecting device.

Fig. 14 is a flowchart illustrating a volumetric reproduction process.

Fig. 15 is a flowchart illustrating details of a packing image generation process in step S12 of Fig. 14.

Fig. 16 is a diagram illustrating switching of streams in units of GOPs.

Fig. 17 is a flowchart illustrating details of a resolution calculation process in step S44 of Fig. 15.

Fig. 18 is a flowchart illustrating details of a mapping process in step S45 of Fig. 15.

Fig. 19 is a diagram illustrating examples of meta information of the imaging device and meta information of a bitstream.

Fig. 20 is a diagram illustrating an example of a plurality of types of packing images according to a first modification.

Fig. 21 is a flowchart illustrating a packing image generation process according to the first modification.

Fig. 22 is a flowchart illustrating a process relating to selection of a packing image in the first modification.

Fig. 23 is a flowchart illustrating a process relating to selection of a packing image in a second modification.

Fig. 24 is a view illustrating a third modification.

Fig. 25 is a flowchart illustrating a process relating to selection of a packing image in the third modification.

Fig. 26 is a block diagram illustrating a configuration example of an embodiment of a computer to which the present technology is applied.

MODE FOR CARRYING OUT THE INVENTION

Hereinafter, an embodiment for implementing the present technology (hereinafter, referred to as an embodiment) will be described. Note that the description will be given in the following order.

1. Overview of Image Processing System
2. Configuration Example of Image Processing System
3. Volumetric Reproduction Process
4. Packing Image Generation Process
5. Resolution Calculation Process
6. Mapping Process
7. First Modification
8. Second Modification
9. Third Modification
10. Computer Configuration Example

<1. Overview of image processing system>

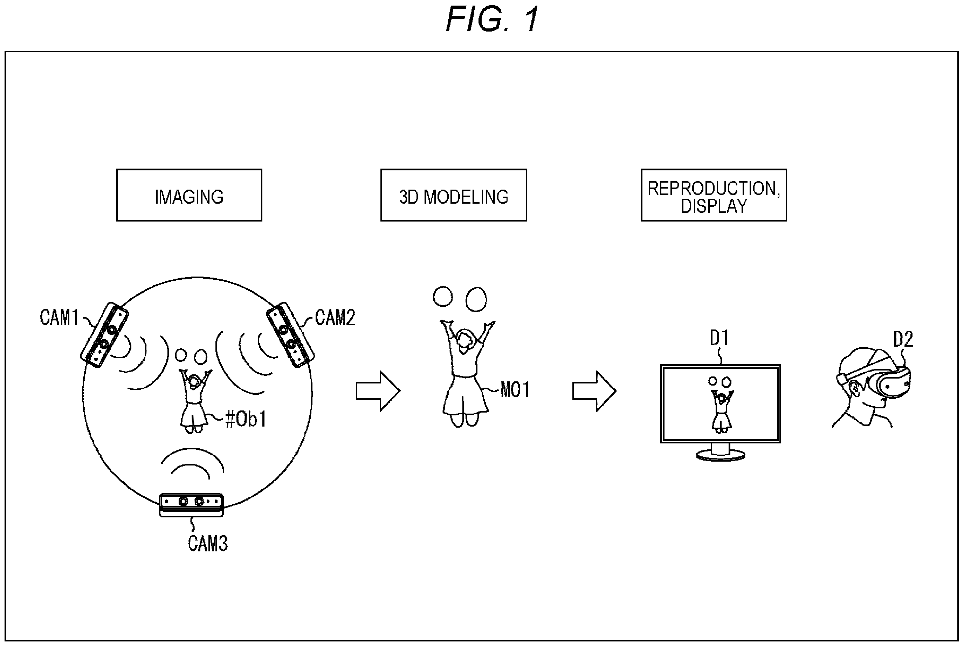

First, with reference to Fig. 1, an overview of an image processing system to which the present technology is applied will be described.

Fig. 1 illustrates a series of events from generation of captured images to viewing/listening in an image processing system to which the present technology is applied.

The image processing system to which the present technology is applied includes a distribution side that generates and distributes a 3D model of an object from captured images obtained by imaging with a plurality of imaging devices, and a reproduction side that receives the 3D model transmitted from the distribution side, and reproduces and displays the 3D model.

On the distribution side, a plurality of captured images can be obtained by imaging a predetermined imaging space from the outer periphery thereof with a plurality of imaging devices. A captured image includes, for example, a moving image. In the example of Fig. 1, three imaging devices CAM1 to CAM3 are arranged so as to surround a subject #Ob1; however, the number of imaging devices CAM is not limited to three and is any number. The subject #Ob1 is assumed to be a person performing a predetermined action.

By using captured images obtained by the plurality of imaging devices CAM in different directions, a 3D object MO1, which is a 3D model of the subject #Ob1 to be displayed in the imaging space is generated (3D modeling). For example, the 3D object MO1 is generated by using a technique such as Visual Hull that cuts out the three-dimensional shape of the subject by using captured images in different directions.

Then, among one or more 3D objects existing in the imaging space, data of one or more 3D objects (hereinafter, also referred to as 3D model data) is transmitted to a device on the reproduction side and reproduced. That is, the device on the reproduction side renders the 3D object on the basis of acquired data of the 3D object, so that 3D-shaped video is displayed on a viewing/listening device of a viewer/listener. Fig. 1 illustrates an example in which the viewing/listening device is a display D1 or a head-mounted display (HMD) D2.

The reproduction side can request only a 3D object to be viewed/listened from among one or more 3D objects existing in the imaging space and can display the 3D object on the viewing/listening device. For example, the reproduction side assumes a virtual camera whose imaging range is the viewing/listening range of the viewer/listener, requests only a 3D object that can be captured by the virtual camera among many 3D objects existing in the imaging space, and displays the 3D objects on the viewing/listening device. The viewpoint (virtual viewpoint) of the virtual camera can be set to any location so that the viewer/listener can see the subject from any viewpoint in the real world. A background video representing a predetermined space is appropriately combined with the 3D object.

<2. Configuration example of image processing system>

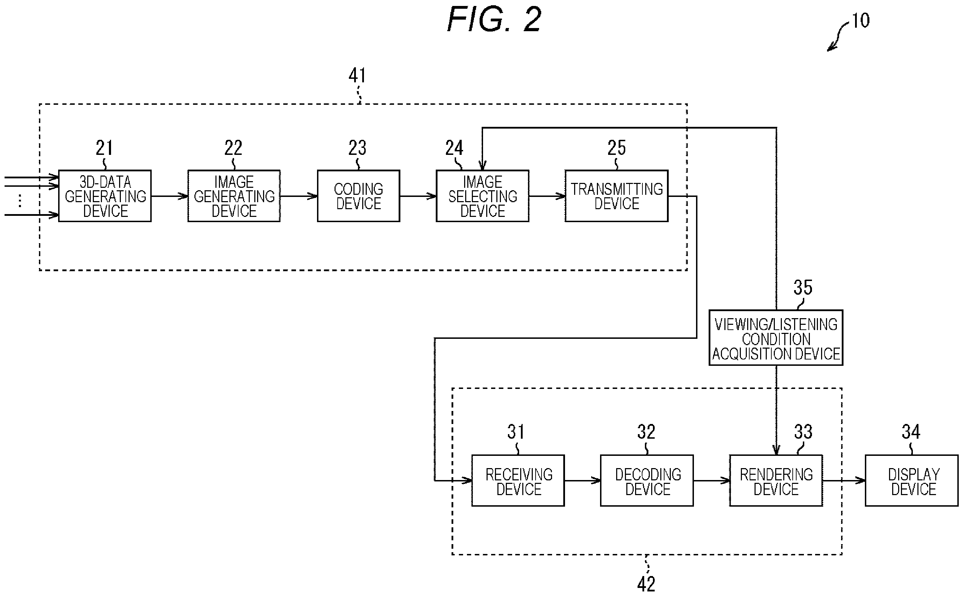

Fig. 2 is a block diagram illustrating a configuration example of the image processing system to which the present technology is applied.

The image processing system 10 of Fig. 2 includes a 3D-data generating device 21, an image generating device 22, a coding device 23, an image selecting device 24, and a transmitting device 25, as the distribution side illustrated in Fig. 1.

The 3D-data generating device 21, the image generating device 22, the coding device 23, the image selecting device 24, and the transmitting device 25 on the distribution side may be individually constituted, or two or more of the devices may be integrated. For example, as indicated by broken lines in Fig. 1, the 3D-data generating device 21, the image generating device 22, the coding device 23, the image selecting device 24, and the transmitting device 25 may constitute one distribution device 41. In this case, the 3D-data generating device 21, the image generating device 22, the coding device 23, the image selecting device 24, and the transmitting device 25 constitute a 3D-data generation unit, an image generation unit, a coding unit, an image selection unit, and a transmission unit of the distribution device 41, respectively.

Furthermore, the image processing system 10 includes a receiving device 31, a decoding device 32, a rendering device 33, a display device 34, and a viewing/listening-condition acquisition device 35, as the reproduction side illustrated in Fig. 1.

The receiving device 31, the decoding device 32, and the rendering device 33 on the reproduction side may be individually constituted, or two or more of the devices may be integrated. For example, as indicated by broken lines in Fig. 1, the receiving device 31, the decoding device 32, and the rendering device 33 may constitute one reproduction device 42. In this case, the receiving device 31, the decoding device 32, and the rendering device 33 constitute a reception unit, a decoding unit, and a rendering unit of the reproduction device 42, respectively.

The transmitting device 25 on the distribution side and the receiving device 31 on the reproduction side are connected via a predetermined network. The network includes, for example, a leased line network such as various local area networks (LANs), wide area networks (WANs), Internet Protocol-Virtual Private Networks (IP-VPNs), or the like including the Internet, a telephone network, a satellite communication network, and Ethernet (registered trademark), and the like.

A captured image is supplied to the 3D-data generating device 21 of the image processing system 10 from each of the plurality of imaging devices that has imaged the subject. The captured image is information for specifying the color of the subject, and is hereinafter referred to as a texture image. The texture image includes a moving image.

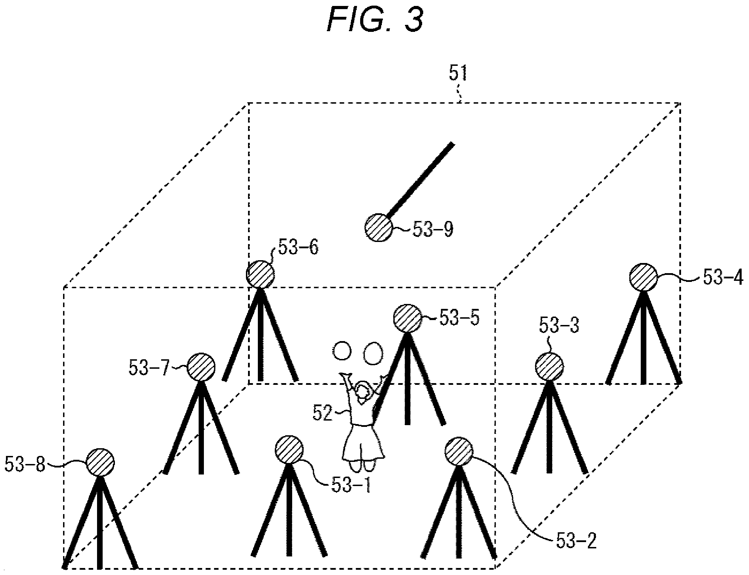

Fig. 3 is a view schematically illustrating a positional relationship between a plurality of imaging devices and a subject.

In the example of Fig. 3, a subject 52 including a person and two balls exists in the central portion of the imaging space 51 such as a room. Then, nine imaging devices 53-1 to 53-9 are arranged so as to surround the subject 52. Note that a circle with a shaded pattern represents each of the imaging devices 53-1 to 53-9 in a simplified manner.

The imaging device 53-1, the imaging device 53-3, the imaging device 53-5, and the imaging device 53-7 are arranged so as to face the subject 52 from substantially the center of respective walls of the imaging space 51. The imaging device 53-1 and the imaging device 53-5 face each other, and the imaging device 53-3 and the imaging device 53-7 face each other. The imaging device 53-2, the imaging device 53-4, the imaging device 53-6, and the imaging device 53-8 are arranged so as to face the subject 52 from vicinities of respective corners of the imaging space 51. The imaging device 53-2 and the imaging device 53-6 face each other, and the imaging device 53-4 and the imaging device 53-8 face each other. The imaging device 53-9 is arranged so as to look down on the subject 52 from substantially the center of the ceiling of the imaging space 51.

As described, the imaging devices 53-1 to 53-9 are arranged at different positions, image the subject 52 from different viewpoints (actual viewpoints), and supply texture images obtained as a result to the 3D-data generating device 21. The position of each imaging device 53 on the world coordinate system is known, and camera parameters (external parameter and internal parameter) of each imaging device 53 are also supplied to the 3D-data generating device 21.

Note that the imaging device 53 generates a background image obtained by imaging the imaging space 51 in the absence of the subject 52, as a preparation in advance for generating 3D model data. The background image does not have to be a moving image, and may be a still image. The background image may be transmitted to the reproduction side, and on the reproduction side, the 3D object of the 3D model data that has been transmitted can be combined with the background image so as to be displayed.

Returning to Fig. 2, the 3D-data generating device 21 uses the texture images of the subject and the camera parameters supplied from the plurality of imaging devices 53 respectively to generate a 3D model for each object by regarding one or more subjects existing in the imaging space 51 as one object, and supplies 3D-model data of each object that has been generated to the image generating device 22.

For example, the 3D-data generating device 21 extracts the difference between the texture image including the subject supplied from the imaging device 53 and the background image to generate a silhouette image obtained by extracting the subject area. Then, the 3D-data generating device 21 uses a plurality of pieces of silhouette images in different directions and the camera parameters to generate a 3D model of the object by a technique such as Visual Hull, and generates 3D-model data representing the 3D model that has been generated.

The format of the 3D-model data is assumed to be a format corresponding to view-dependent rendering in which colors are added on the reproduction terminal side according to the viewpoint (virtual viewpoint) at the time of viewing/listening. In other words, the format of the 3D-model data is a format in which the texture images captured by the plurality of imaging devices 53 are transmitted as color information to the reproduction terminal side.

In the format corresponding to view-dependent rendering in which the texture image captured by each imaging device 53 is transmitted as color information, data format of the geometry information that defines the shape of the object does not matter. For example, the geometry information of an object may be depth images corresponding to texture images captured by the plurality of imaging devices 53, a point cloud representing the three-dimensional position of the object as a set of points, or a polygon mesh representing the three-dimensional position of the object as connection between vertices.

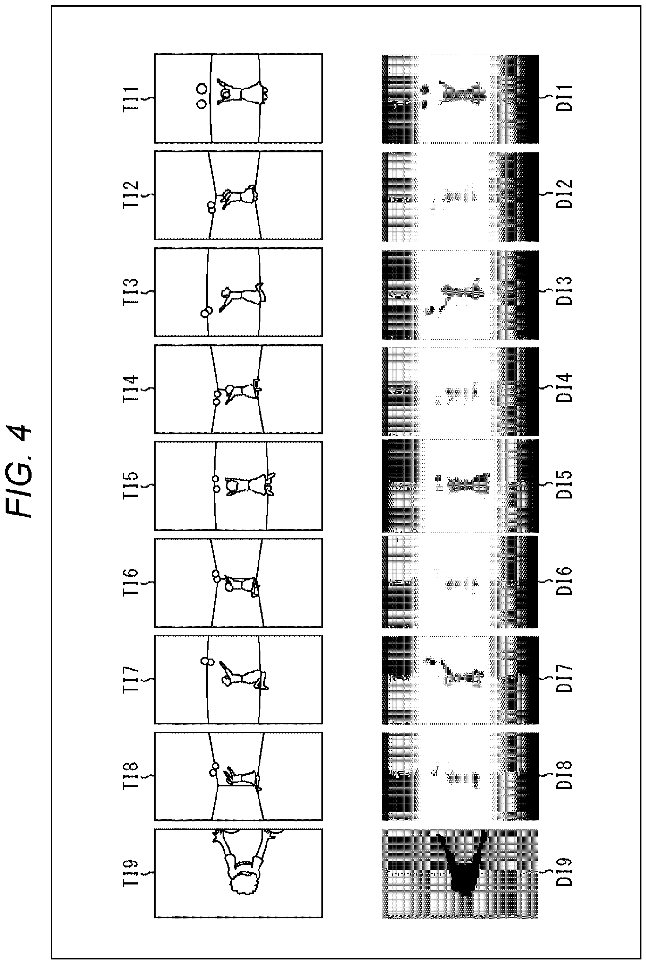

Fig. 4 illustrates examples of depth images corresponding to texture image obtained by the imaging devices 53-1 to 53-9 as geometry information of the object.

Texture images TI1 to TI9 represent examples of the texture images captured by the imaging devices 53-1 to 53-9.

Depth images DI1 to DI9 represent examples of the depth images corresponding to the texture images TI1 to TI9.

In the present embodiment, with respect to color information of the object, (at least some of) the texture images captured by the respective imaging devices 53 are transmitted, and with respect to geometry information of the object, any of a depth image, a point cloud, and a polygon mesh may be adopted. Hereinafter, data of the object represented in a predetermined format as the geometry information of the object is also referred to as three-dimensional data of the object.

Returning to Fig. 2, the 3D-data generating device 21 supplies the 3D model data that has been generated to the image generating device 22.

The image generating device 22 arranges the texture images of the object captured by the respective imaging devices 53, the texture images being included in the 3D model data supplied from the 3D-data generating device 21, in a predetermined order and packs (combines) the texture images into one image to generate a packing image of the object. Hereinafter, for the sake of simplicity, a cropped image obtained by extracting only an object area from a texture image is referred to as an object image, and an image in which a plurality of object images is packed into one image is a packing image.

The image generating device 22 sets a plurality of virtual viewpoints (assumed virtual viewpoints) assumed on the reproduction side, and generates a packing image for each assumed virtual viewpoint.

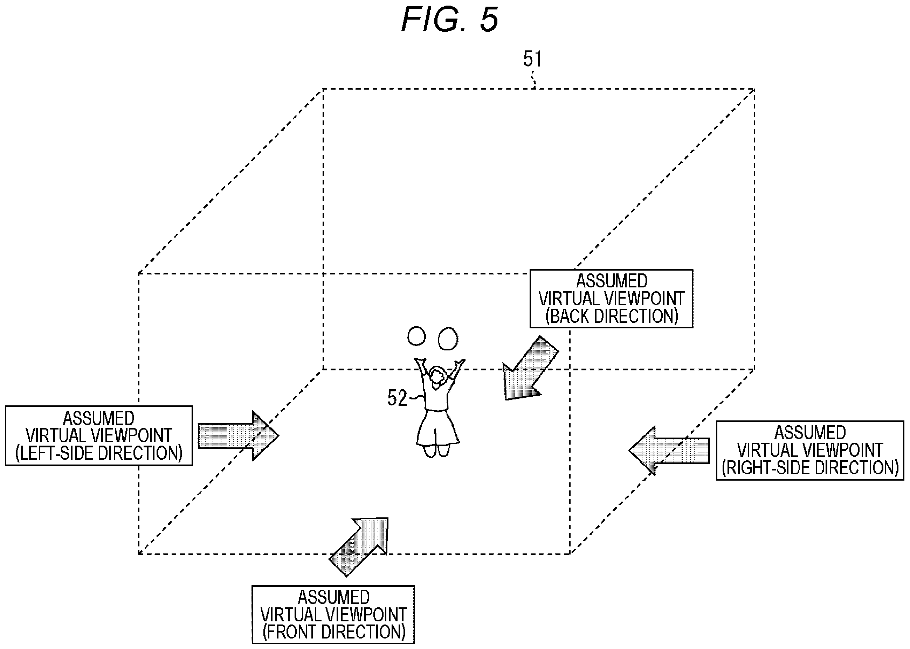

For example, as illustrated in Fig. 5, the image generating device 22 determines four directions, that is, the front direction, the right-side direction, the back direction, and the left-side direction of the subject 52 to be assumed virtual viewpoints, and generates four types of packing images. Note that "direction" used in the present Description, such as the front direction, the right-side direction, the back direction, and the left-side direction of the subject 52, is used as a concept having a certain angle.

When the image generating device 22 generates a packing image for each assumed virtual viewpoint, instead of packing a plurality of object images under the same condition, the image generating device 22 sets a plurality of reduction ratios of the object images and packs the plurality of object images reduced by different reduction ratios to generate a packing image. More specifically, the image generating device 22 generates a packing image in which a plurality of object images is packed in one frame by making the resolution of the object image in the direction closer to the assumed virtual viewpoint higher than the resolutions of the object images in the other directions.

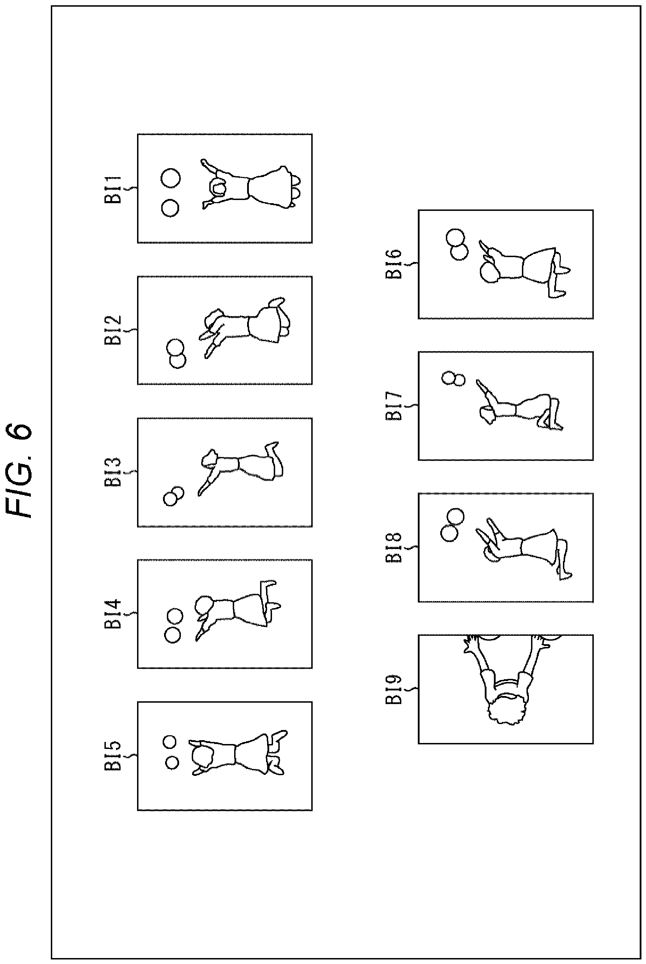

With reference to Figs. 6 to 10, an example will be described in which the image generating device 22 uses nine pieces of the texture images TI1 to TI9 captured by the imaging devices 53-1 to 53-9, respectively, and generates four types of packing images corresponding to the assumed virtual viewpoints in four directions illustrated in Fig. 5.

The nine texture images TI1 to TI9 captured by the imaging devices 53-1 to 53-9, respectively, are supplied to the image generating device 22. The image generating device 22 generates object images BI1 to BI9 by cutting out foreground areas from the nine pieces of texture images TI1 to TI9, respectively.

Fig. 6 illustrates examples of the nine pieces of object images BI1 to BI9 generated from the nine pieces of texture images TI1 to TI9.

The image generating device 22 generates a packing image by reducing the nine pieces of object images BI1 to BI9 by predetermined reduction ratios as necessary and packing (combining) the nine pieces of object images BI1 to BI9 into one image.

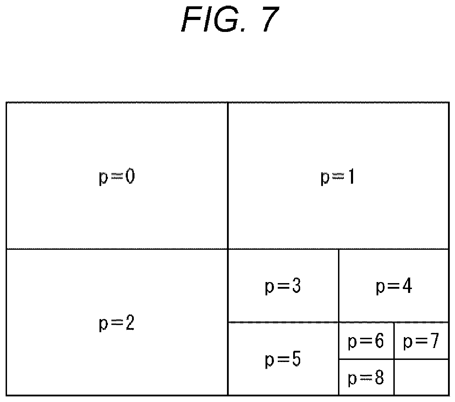

Fig. 7 illustrates an example of object-image mapping in a case where nine pieces of object images are arranged in a predetermined order to generate one packing image.

p (p = 0, 2, 3, ..., 8) is a parameter that identifies the layout position (mapping location) of one packing image.

Object images whose reduction ratio is the same magnification as the original object image is mapped to the layout positions p = 0 to 2. Object images whose reduction ratio is 1/2 of the original object image are mapped to the layout positions p = 3 to 5. Object images whose reduction ratio is 1/4 of the original object image are mapped to the layout positions p = 6 to 8.

Which object image of the nine pieces of object images BI1 to BI9 is mapped to each of the layout positions p = 0 to 8 is determined on the basis of the assumed virtual viewpoint.

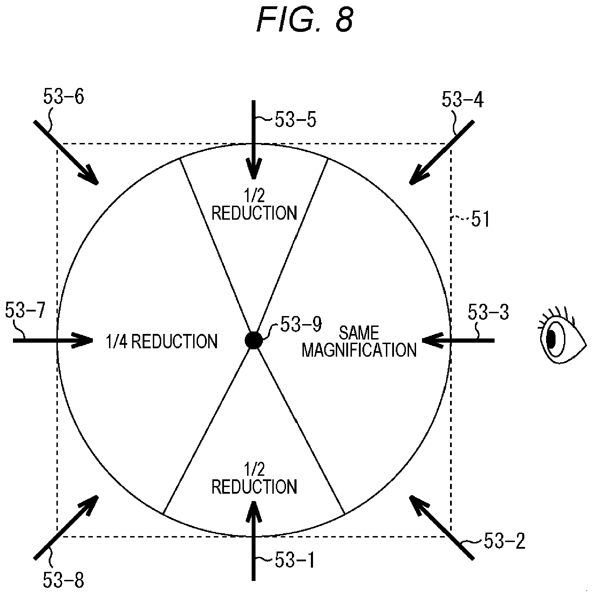

Fig. 8 is a diagram illustrating the object images BI1 to BI9 mapped to the layout positions p = 0 to 8 in a case where the assumed virtual viewpoint is in the right-side direction.

In Fig. 8, the directions of the imaging devices 53-1 to 53-9 with respect to the imaging space 51 are indicated by arrows, and the assumed virtual viewpoint is represented by an illustration of an eye. In a case where the assumed virtual viewpoint is set to the right-side direction, the imaging direction closest to the assumed virtual viewpoint is the imaging direction of the imaging device 53-3.

The object images BI2 to BI4 generated from the texture images TI2 to TI4 captured by the imaging devices 53-2 to 53-4 closest to the assumed virtual viewpoint are mapped to the layout positions p = 0 to 2 where the reduction ratio is the same magnification.

The object images BI1, BI5, and BI9 generated from the texture images TI1, TI5, and TI9 captured by the imaging devices 53-1, 53-5, and 53-9, which are next closest to the assumed virtual viewpoint, are mapped to the layout positions p = 3 to 5 of the packing image with the reduction ratio of 1/2.

The object images BI6 to BI8 generated from the texture images TI6 to TI8 captured by the imaging devices 53-6 to 53-8 farther from the assumed virtual viewpoint are mapped to the layout positions p = 6 to 8 of the packing image with the reduction ratio of 1/4.

As described above, when the image generating device 22 packs (combines) the nine pieces of object images BI1 to BI9 into one image, the object images are packed such that the farther the imaging direction (viewpoint) of the image is from the assumed virtual viewpoint, the smaller the reduction ratio of the image is set to be, that is, the smaller the image size is set to be.

In other words, when the image generating device 22 packs the nine pieces of object images BI1 to BI9 into one image, the object images are packed such that the closer the imaging direction (viewpoint) of the image is to the assumed virtual viewpoint, the closer the resolution (image size) is to that of the original texture image.

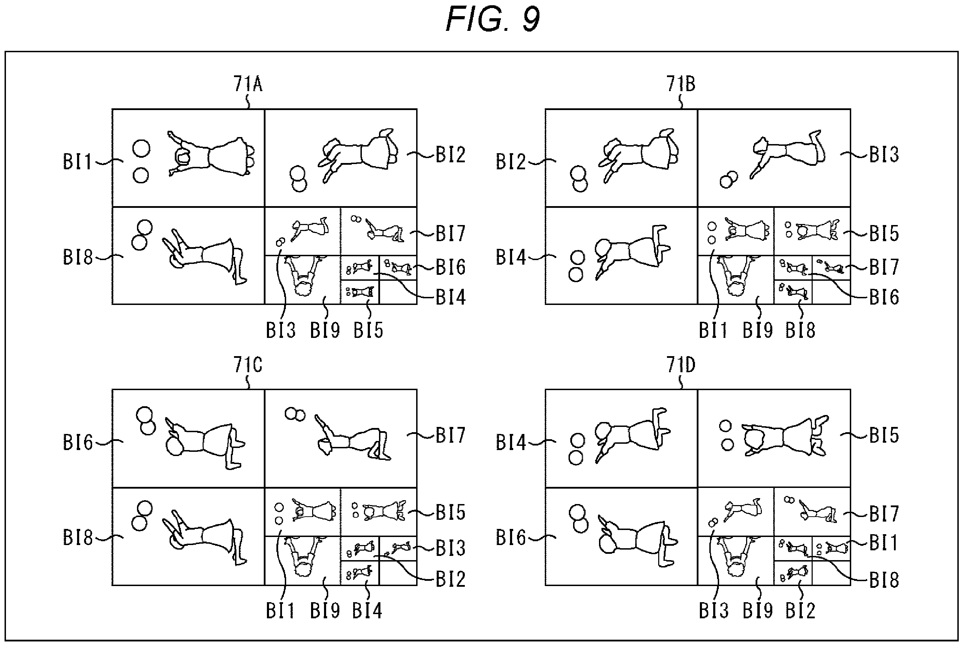

Fig. 9 illustrates an example of four pieces (four types) of packing images generated for the assumed virtual viewpoints in the four directions illustrated in Fig. 5, by using the nine pieces of object images BI1 to BI9.

A first packing image 71A illustrates a packing image in a case where the assumed virtual viewpoint is in the front direction, which is the same as the imaging direction of the imaging device 53-1.

The object images BI1, BI2, and BI8 generated from the texture images TI1, TI2, and TI8 captured by the imaging devices 53-1, 53-2, and 53-8 are mapped to layout positions p = 0 to 2 of the first packing image 71A whose assumed virtual viewpoint is in the front direction.

A second packing image 71B illustrates a packing image in a case where the assumed virtual viewpoint is in the right-side direction, which is the same as the imaging direction of the imaging device 53-3.

The object images BI2, BI3, and BI4 generated from the texture images TI2, TI3, and TI4 captured by the imaging devices 53-2, 53-3, and 53-4 are mapped to layout positions p = 0 to 2 of the second packing image 71B whose assumed virtual viewpoint is in the right-side direction.

A third packing image 71C illustrates a packing image in a case where the assumed virtual viewpoint is in the left-side direction, which is the same as the imaging direction of the imaging device 53-7.

The object images BI6, BI7, and BI8 generated from the texture images TI6, TI7, and TI8 captured by the imaging devices 53-6, 53-7, and 53-8 are mapped to layout positions p = 0 to 2 of the third packing image 71C whose assumed virtual viewpoint is in the left-side direction.

A fourth packing image 71D illustrates a packing image in a case where the assumed virtual viewpoint is in the back direction, which is the same as the imaging direction of the imaging device 53-5.

The object images BI4, BI5, and BI6 generated from the texture images TI4, TI5, and TI6 captured by the imaging devices 53-4, 53-5, and 53-6 are mapped to layout positions p = 0 to 2 of the fourth packing image 71D whose assumed virtual viewpoint is in the back direction.

Even though the description of the other layout positions p = 3 to 8 of the first to fourth packing images 71A to 71D will be omitted, mapping is performed according to the rule illustrated in Fig. 8 based on the assumed virtual viewpoint.

As described, by generating a packing image according to the assumed viewpoint, the object image in the imaging direction closer to the assumed virtual viewpoint is provided to the reproduction side with a reduction ratio closer to the original resolution, and rendering can be performed by using high-definition images.

Furthermore, also an object image in an imaging direction farther from the assumed virtual viewpoint, such as the back side of the assumed virtual viewpoint, can be provided to the reproduction side even though the reduction ratio thereof is small. Therefore, for example, even if the virtual viewpoint suddenly changes due to a sudden change in the viewing/listening direction of the user wearing the head-mounted display, rendering can be performed without image interruption.

As described above, by simply transmitting one of the plurality of packing images generated by the image generating device 22 from the distribution side to the reproduction side, a high-quality object image can be viewed/listened at the assumed viewpoint, and rendering is possible without interruption of the screen even if the viewpoint is suddenly changed to a viewpoint other than the assumed viewpoint. That is, while suppressing the transmission amount transmitted from the distribution side to the reproduction side, it is possible to guarantee high-quality rendering at the assumed viewpoint and at least the minimum rendering in part or all the areas other than the assumed viewpoint.

On the reproduction side, only the bitstream of one packing image is received out of the bitstreams of the four types of packing images corresponding to the assumed virtual viewpoints in the four directions. In other words, the bitstreams of the four types of packing images are switched according to the viewpoint of the viewer/listener (virtual viewpoint).

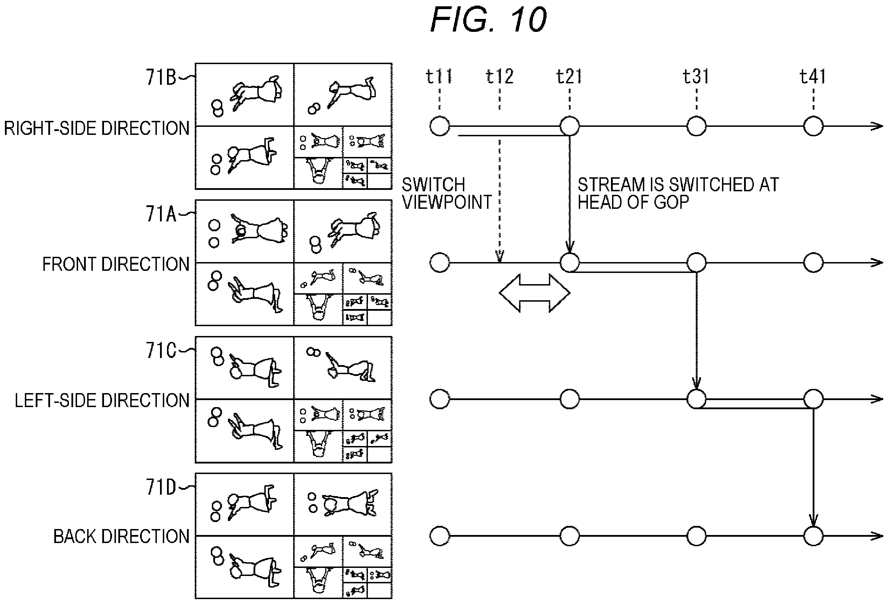

In transmission of bitstreams, bitstreams can only be switched in units of groups of pictures (GOPs). For example, as illustrated in Fig. 10, the rendering device 33 on the reproduction side performs reproduction and display on the basis of the bit stream of the second packing image 71B in the right-side direction at time point t11. Even in a case where the viewpoint of the viewer/listener suddenly changes to the front direction at time point t12, the bitstream is changed to the bitstream of the first packing image 71A at time point t21. In Fig. 10, each of the circles at time points t11, t21, t31, and t41 represents the head of the GOP of the bitstream. Therefore, from time point t12 to time point t21, the bitstream of the second packing image 71B in the right-side direction is used. By packing the object images BI1 to BI9 in all the imaging directions in the bitstream of one packing image 71, reproduction and display can be performed by using the object images BI packed in the stream before the stream is switched. Therefore, the image can be rendered without interruption.

Note that the layout of the packing image 71 illustrated in Figs. 7 to 9 is only an example, and the layout of the packing image 71 can be arbitrarily determined depending on the number and arrangement (imaging positions) of the imaging devices 53. Needless to say, in a case where the number of imaging devices 53 is nine, a layout different from the layout illustrated in Fig. 7 may be adopted.

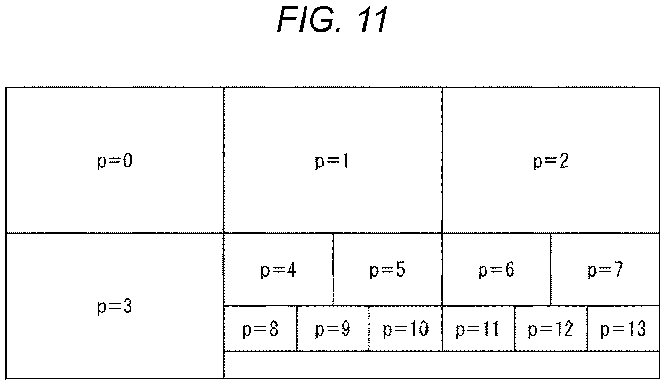

Fig. 11 illustrates an example of the layout of the packing image in a case where the number of imaging devices 53 is 14.

In this packing image, object images mapped to layout positions p = 0 to 3 are regarded as object images having the reduction ratio of the same magnification.

In the image processing system 10, the number of imaging devices 53 can be determined to be any number, and in addition, the arrangement of the imaging devices 53 can also be arbitrarily determined.

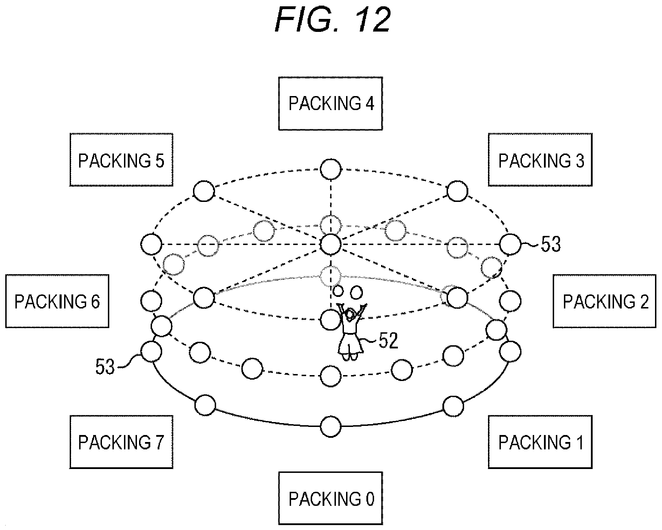

For example, as illustrated in Fig. 12, a configuration in which a plurality of heights at which the imaging devices 53 image the subject 52 is set is also possible by setting an arrangement in which the imaging devices 53 image the subject 52 from below, an arrangement in which the imaging devices 53 image the subject 52 in the horizontal direction, and an arrangement in which the imaging devices 53 image the subject 52 from above.

In the example of Fig. 12, a configuration is adopted in which the subject 52 is imaged by a total of 32 imaging devices 53, that is, eight imaging devices 53 in the upper row, 16 imaging devices 53 in the middle row, and eight imaging devices 53 in the lower row. 32 object images are generated from 32 pieces of texture images obtained by the 32 imaging devices, and (a bitstream of) one packing image is generated. Furthermore, in the example of Fig. 12, eight assumed virtual viewpoints are set, and bitstreams of eight types of packing images are generated. Even in a case where the number of imaging devices 53 is great as described, only one bitstream is transmitted from the distribution side to the reproduction side. Therefore, it is possible to perform reproduction and display with a high resolution while reducing the amount of data to be transmitted, and can also be applied to real-time processing.

Note that in the image processing system 10, it is assumed that one packing image is generated by packing all the object images of the plurality of imaging devices 53 that has imaged the subject 52 and the one packing image is transmitted; however, for example, as illustrated in Fig. 12, in a case where the number of imaging devices 53 is great, or the like, object images corresponding to some of a plurality of imaging devices 53 that has performed imaging may be packed and one packing image may be generated.

The image processing system 10 can flexibly generate a packing image according to the arrangement of the imaging devices 53.

Returning to Fig. 2, the image generating device 22 supplies a plurality of types of packing images generated for each assumed virtual viewpoint to the coding device 23.

The coding device 23 codes the packing image for each assumed virtual viewpoint supplied from the image generating device 22 by a predetermined coding scheme such as an AVC scheme, an HEVC scheme, or the like. The coded stream of the packing image obtained by coding is supplied to the image selecting device 24.

Furthermore, the coding device 23 also codes geometry information (three-dimensional data) of the object by a predetermined coding scheme and supplies the geometry information to the image selecting device 24.

Note that the present technology relates to a technology of transmitting a texture image as color information of an object, and it is only required to transmit geometry information of the object by any technique. Therefore, description of transmission of geometry information will be appropriately omitted below.

A coded stream of the packing image for each assumed virtual viewpoint is supplied to the image selecting device 24 from the coding device 23. Furthermore, virtual viewpoint information, which is information regarding the virtual viewpoint, is supplied from the viewing/listening-condition acquisition device 35 to the image selecting device 24. The virtual viewpoint information is information that specifies the viewing/listening range of the viewer/listener on the reproduction side, and includes, for example, camera parameters (external parameter and internal parameter) of the virtual camera whose imaging range is the viewing/listening range of the viewer/listener.

The image selecting device 24 selects one of a plurality of coded streams of the packing images supplied from the coding device 23, on the basis of the virtual viewpoint information from the viewing/listening-condition acquisition device 35, and supplies the coded stream to the transmitting device 25.

In the example of Fig. 9, a predetermined one coded stream is selected from among the coded streams of the four types of packing images 71 in the front direction, the right-side direction, the right-side direction, and the back direction, and is supplied to the transmitting device 25.

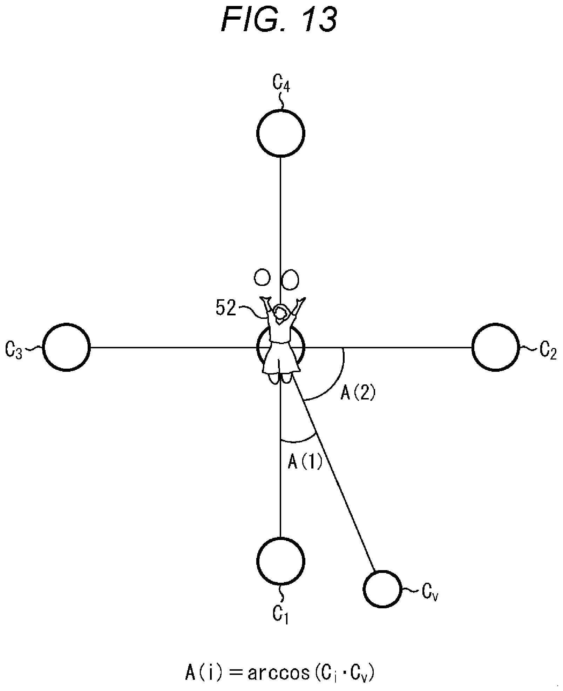

Fig. 13 is a diagram illustrating a selection process of the image selecting device 24 for selecting a predetermined one coded stream from among a plurality of coded streams of packing images.

Assuming that the three-dimensional position of the assumed virtual viewpoint of the packing image is $C_i$ (i = 1 to 4) and the three-dimensional position of the virtual viewpoint of the viewer/listener based on the virtual viewpoint information from the viewing/listening-condition acquisition device 35 is $C_v$, the image selecting device 24 calculates angle A(i) formed by the assumed virtual viewpoint obtained by the following Expression (1) and the virtual viewpoint of the viewer/listener. Then, the image selecting device 24 selects the coded stream of the packing image of the assumed virtual viewpoint having the smallest angle A(i) as the coded stream to be transmitted to the reproduction side, and supplies the coded stream to the transmitting device 25.

$$\mathrm{A(i)} = \arccos(\mathrm{C_i \cdot C_v}) \quad \cdots \cdots (1)$$

Returning to Fig. 2, the transmitting device 25 transmits the coded stream of the packing image supplied from the image selecting device 24 to the receiving device 31 via the network.

The receiving device 31 receives (acquires) the coded stream of the packing image transmitted from the transmitting device 25 and supplies the coded stream to the decoding device 32.

The decoding device 32 decodes the coded stream of the packing image supplied from the receiving device 31 by a scheme corresponding to the coding scheme in the coding device 23. The decoding device 32 supplies the packing image of the predetermined assumed virtual viewpoint obtained by decoding to the rendering device 33.

Furthermore, the decoding device 32 also decodes the coded stream of the geometry information of the object transmitted from the distribution side together with the coded stream of the packing image, by a scheme corresponding to the coding scheme in the coding device 23, and supplies the coded stream of the geometry information to the rendering device 33.

The rendering device 33 uses the packing image supplied from the decoding device 32 to generate a virtual viewpoint image in which the object is viewed from the virtual viewpoint, which is the viewpoint of the viewer/listener, as a display image, and supplies the virtual viewpoint image to the display device 34. The virtual viewpoint is specified by virtual viewpoint information supplied from the viewing/listening-condition acquisition device 35.

Specifically, the rendering device 33 reconstructs the 3D shape of the object on the basis of the geometry information of the object transmitted in a predetermined format such as a depth image, a point cloud, or a polygon mesh.

Furthermore, the rendering device 33 selects a plurality of object images from among the object images of a plurality of viewpoints (imaging directions) included in the packing image, on the basis of the viewpoint of the viewer/listener (virtual viewpoint). Then, the rendering device 33 blends the colors of the pixels corresponding to the vertices of the plurality of object images that has been selected, and thus determines the color of the pixel corresponding to each vertex of the 3D shape of the object that has been reconstructed and generates a virtual viewpoint image.

The display device 34 includes, for example, a two-dimensional head-mounted display (HMD), a two-dimensional monitor, or the like. The display device 34 displays the display image in two dimensions, the display image having been supplied from the rendering device 33.

Note that the display device 34 may include a three-dimensional head-mounted display, a three-dimensional monitor, or the like. In this case, the rendering device 33 supplies, for example, an R image for the right eye and an L image for the left eye to the display device 34, and the display device 34 displays a display image in three dimensions on the basis of the R image and the L image supplied from the rendering device 33.

The viewing/listening-condition acquisition device 35 detects the viewing/listening condition (viewing/listening status) of the viewer/listener, generates virtual viewpoint information regarding the virtual viewpoint, and supplies the virtual viewpoint information to the image selecting device 24 and the rendering device 33. The virtual viewpoint information includes, for example, camera parameters (external parameter and internal parameter) of a virtual camera whose imaging range is the viewing/listening range of the viewer/listener.

For example, in a case where the display device 34 is the head-mounted display D2 of Fig. 1, the viewing/listening-condition acquisition device 35 can include a detecting device that detects the position and orientation of the head-mounted display D2 by imaging a marker or the like attached to the head-mounted display D2. Alternatively, the viewing/listening-condition acquisition device 35 may include a group of various types of sensors such as a gyro sensor built in the head-mounted display D2.

For example, in a case where the display device 34 is the display D1 of Fig. 1, the viewing/listening-condition acquisition device 35 can include an input device that indicates the virtual viewpoint, such as a controller such as a joystick, a mouse, or the like.

The image processing system 10 is configured as described above.

Note that in the present Description, only video information is described as transmission data transmitted from the distribution side to the reproduction side, and the description of audio information is omitted; however, audio information corresponding to a moving image can also be transmitted.

Assuming that the distribution device 41 is configured on the distribution side of the image processing system 10 and the reproduction device 42 is configured on the reproduction side, the distribution device 41 uses a texture image (moving image) of a subject supplied from each of the plurality of imaging devices 53 and camera parameters to generate a coded stream of the packing image of each of a plurality of assumed virtual viewpoints determined in advance. Then, the distribution device 41 selects the coded stream of predetermined one packing image from among the coded streams of the plurality of packing images on the basis of the virtual viewpoint information from the viewing/listening-condition acquisition device 35, and transmits the coded stream to the reproduction device 42.

The reproduction device 42 receives the coded stream of the packing image transmitted from the distribution device 41 via the network, generates a virtual viewpoint image on the basis of the virtual viewpoint information from the viewing/listening-condition acquisition device 35, and causes the virtual viewpoint image to be displayed on the display device 34.

From among the coded streams of the plurality of packing images having different assumed virtual viewpoints, the coded stream of the most suitable packing image is appropriately selected by Expression (1) according to the viewpoint of the viewer/listener (virtual viewpoint) and is transmitted to the reproduction device 42.

In the image processing system 10, even in a case where the number of imaging devices 53 that image an object (subject 52) is great, only one (coded stream of the) packing image is transmitted to the reproduction side. Therefore, amount of data to be transmitted can be reduced.

Moreover, since the packing image transmitted to the reproduction side is supplied to the reproduction side in such a manner that the closer the object image of the viewpoint is to the viewpoint of the viewer/listener (virtual viewpoint), the higher the resolution thereof is, rendering with high image quality is possible on the reproduction side. Furthermore, since the packing image transmitted to the reproduction side also includes an object image in the imaging direction far from the assumed virtual viewpoint, such as the back side of the assumed virtual viewpoint, rendering is possible without image interruption even if there is a sudden change in the virtual viewpoint. That is, rendering with high image quality can be realized while reducing the amount of data to be transmitted.

According to the image processing system 10, it is not necessary to select, pack, and transmit the moving image of the viewpoint to be transmitted to the reproduction side each time according to the viewing/listening position at the time of reproduction, and it is only necessary to acquire, decode, and display the coded stream of one packing image. Therefore, it is easy to cope with to real-time processing.

Therefore, according to the image processing system 10, it is possible to adapt to real-time processing while reducing the amount of data.

Note that the distribution device 41 on the distribution side and the reproduction device 42 on the reproduction side may be configured by one device without a network therebetween. In this case, the viewing/listening-condition acquisition device 35 is configured as a rendering device 33 or part of the display device 34 in some cases.

<3. Volumetric reproduction process>

Hereinafter, the details of the processing of the image processing system 10 will be further described with reference to the flowchart.

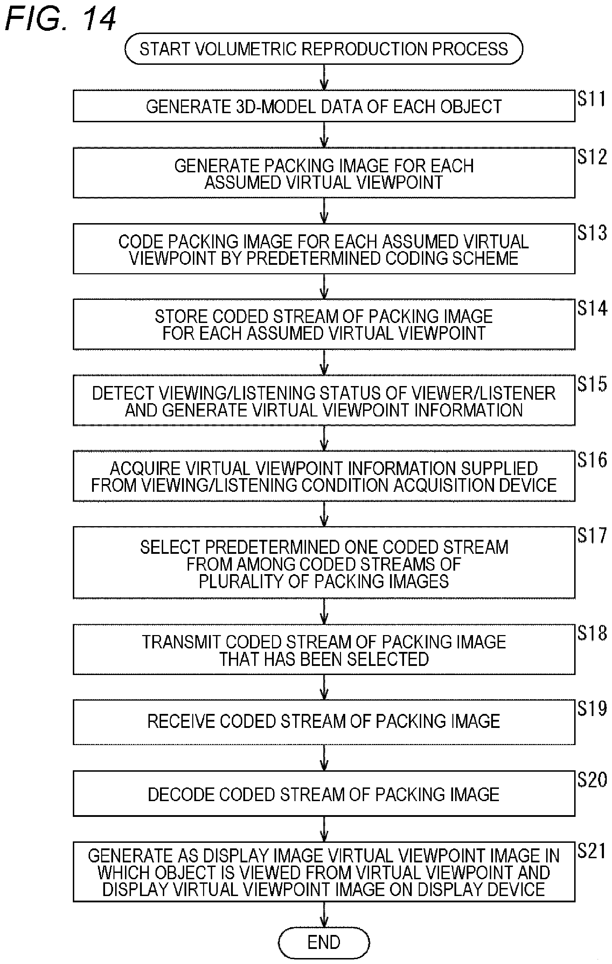

Fig. 14 is a flowchart of the volumetric reproduction process of the entire image processing system 10. This process is started, for example, when a texture image (moving image) of the subject is supplied from each of the plurality of imaging devices 53. Note that it is assumed that the camera parameters of each of the plurality of imaging devices 53 are supplied in advance.

First, in step S11, the 3D-data generating device 21 generates 3D model data of each object and supplies the 3D model data to the image generating device 22. More specifically, the 3D-data generating device 21 uses the texture image of the subject supplied from each of the plurality of imaging devices 53 and the camera parameters, sets one or more subjects existing in the imaging space as one object, and generates a 3D model for each object. Then, the 3D-data generating device 21 supplies the 3D model data of each object that has been generated to the image generating device 22.

In step S12, the image generating device 22 sets a plurality of virtual viewpoints (assumed virtual viewpoints) assumed on the reproduction side, and generates a packing image for each assumed virtual viewpoint. The plurality of packing images that has been generated is supplied to the coding device 23. Note that the packing image for each assumed virtual viewpoint generated here is a moving image.

In step S13, the coding device 23 codes the packing image for each assumed virtual viewpoint supplied from the image generating device 22 by a predetermined coding scheme. Here, it is assumed that the bit rate for coding is, for example, a preset predetermined bit rate (for example, 20 Mbps). The coded stream of the packing image for each assumed virtual viewpoint, obtained as a result of the coding is supplied from the coding device 23 to the image selecting device 24.

In step S14, the image selecting device 24 stores the coded stream of the packing image for each assumed virtual viewpoint supplied from the coding device 23 in an internal memory.

In step S15, the viewing/listening-condition acquisition device 35 detects the viewing/listening status of the viewer/listener, generates virtual viewpoint information regarding the virtual viewpoint, and supplies the virtual viewpoint information to the image selecting device 24 and the rendering device 33.

In step S16, the image selecting device 24 acquires the virtual viewpoint information supplied from the viewing/listening-condition acquisition device 35.

In step S17, the image selecting device 24 selects a predetermined one coded stream from among the coding streams of the plurality of packing images stored in the internal memory, that is, the coding streams of the packing images of the respective assumed virtual viewpoints. More specifically, the image selecting device 24 selects the coded stream of the packing image of the assumed virtual viewpoint having the smallest angle A(i) formed with the virtual viewpoint of the viewer/listener based on the virtual viewpoint information from the viewing/listening-condition acquisition device 35. The coded stream that has been selected is supplied to the transmitting device 25.

In step S18, the transmitting device 25 transmits the coded stream of the packing image supplied from the image selecting device 24 to the receiving device 31 via the network.

In step S19, the receiving device 31 receives (acquires) the coded stream of the packing image transmitted from the transmitting device 25 and supplies the coded stream to the decoding device 32.

In step S20, the decoding device 32 decodes the coded stream of the packing image supplied from the receiving device 31 by a scheme corresponding to the coding scheme in the coding device 23. The decoding device 32 supplies the packing image of the predetermined assumed virtual viewpoint obtained by decoding to the rendering device 33.

In step S21, the rendering device 33 uses the packing image supplied from the decoding device 32 to generate a virtual-viewpoint image in which the object is viewed from the virtual viewpoint as a display image, and supplies the virtual-viewpoint image to the display device 34 to display the virtual-viewpoint image on the display device 34. The virtual viewpoint is specified by the virtual viewpoint information supplied from the viewing/listening-condition acquisition device 35 in step S15.

The above is all of the volumetric reproduction process.

The volumetric reproduction process of Fig. 14 is a flow of a series of processes from when the texture image of the subject 52 is supplied from the imaging device 53 until when the object image is displayed on the display device 34 on the reproduction side.

The virtual viewpoint information acquired in step S16 is updated as needed every time the virtual viewpoint (viewing/listening position) changes. In a case where the virtual viewpoint information acquired in step S16 is updated, the coded stream of the packing image is newly selected according to the virtual viewpoint information in step S17, and steps S18 to S21 are executed on the coded stream of the packing image that has been selected. That is, the processes of steps S16 to S21 are sequentially updated according to the change of the viewpoint (viewing/listening position).

<4. Packing image generation process>

Next, in the volumetric reproduction process described with reference to Fig. 14, the process of step S12, that is, the packing image generation process performed by the image generating device 22 will be described.

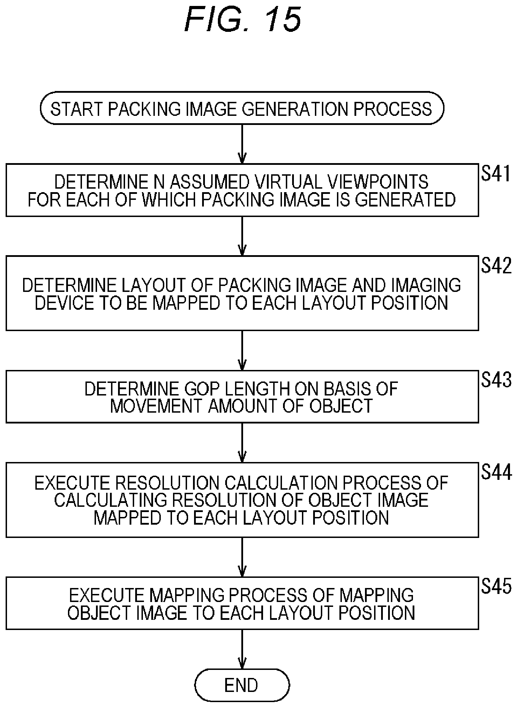

Fig. 15 is a flowchart illustrating details of the packing image generation process in step S12 of Fig. 14.

In this process, first, in step S41, the image generating device 22 determines N assumed virtual viewpoints for each of which a packing image is generated. In the example of Fig. 5, it is assumed that N = 4, and the assumed virtual viewpoints are determined to be in four directions, that is, the front direction, the right-side direction, the back direction, and the left-side direction.

In step S42, the image generating device 22 determines the layout of the packing image and the imaging device 53 to be mapped to each layout position.

The layout of the packing image is, for example, the layout of Fig. 7 or the layout of Fig. 11, and can be determined according to the number and arrangement of the imaging devices 53. The layout includes the position and the reduction ratio in the packing image.

As described with reference to Fig. 8, to determine the imaging device 53 to be mapped to each layout position means that the image generating device 22 determines to which layout position the object image imaged by which imaging device 53 is mapped on the basis of the assumed virtual viewpoint. Note that in the example of Fig. 8, the object images obtained by actually imaging the subject 52 by the imaging devices 53 are mapped and packed; however, it may be assumed that imaging devices 53 are installed at virtual positions and object images captured by the virtual imaging devices 53 may be generated and mapped instead of object images captured by actual imaging devices 53.

In step S43, the image generating device 22 determines the GOP length when the packing image is coded. More specifically, the image generating device 22 determines the GOP length on the basis of the movement amount of the object.

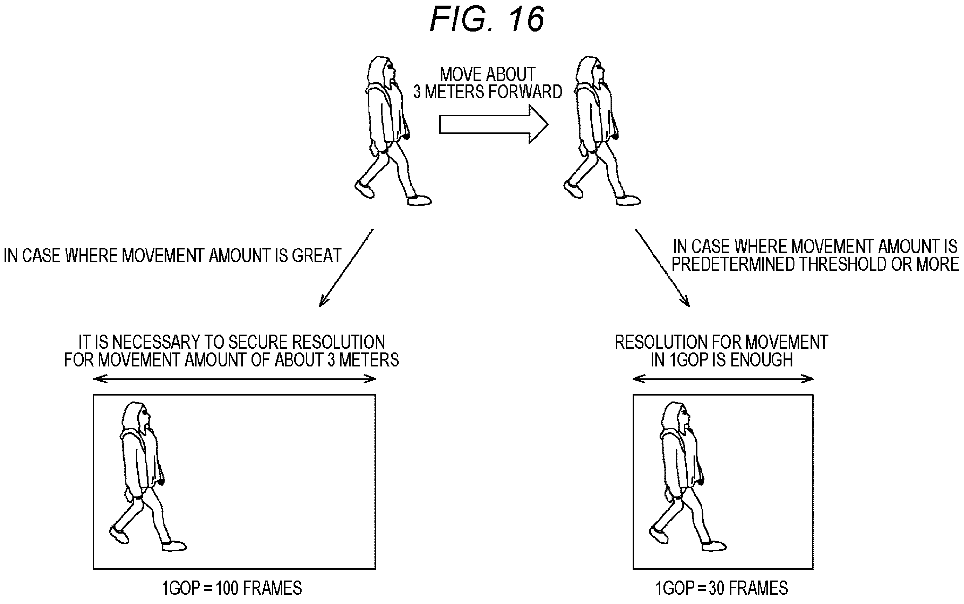

As illustrated in Fig. 16, in a moving image in which the movement amount of an object is great, the resolution (pixel size) of the object image in the case of a GOP unit becomes great, and as a result, the resolution (pixel size) of the packing image obtained by packing the respective object images becomes great.

Therefore, in a case where the movement amount of the object is equal to or more than a predetermined threshold, the image generating device 22 determines the GOP length to a predetermined value. As a result, the resolution (pixel size) of the object image in a GOP unit can be suppressed within a predetermined range, and the resolution (pixel size) of the packing image obtained by packing the respective object images can also be suppressed.

Note that the image generating device 22 may classify the movement amounts of the object into a plurality of ranges and may determine the GOP length stepwise according to the movement amount of the object.

Furthermore, in a case where the movement amount of the object is less than or equal to a predetermined value, the GOP length may not be determined from the standpoint of the movement amount of the object, and the GOP length may be determined from another standpoint such as a bitstream compression ratio, decoding load, image quality, or the like. By setting the resolution of the object image variably for each GOP, bitstream coding efficiency can be improved.

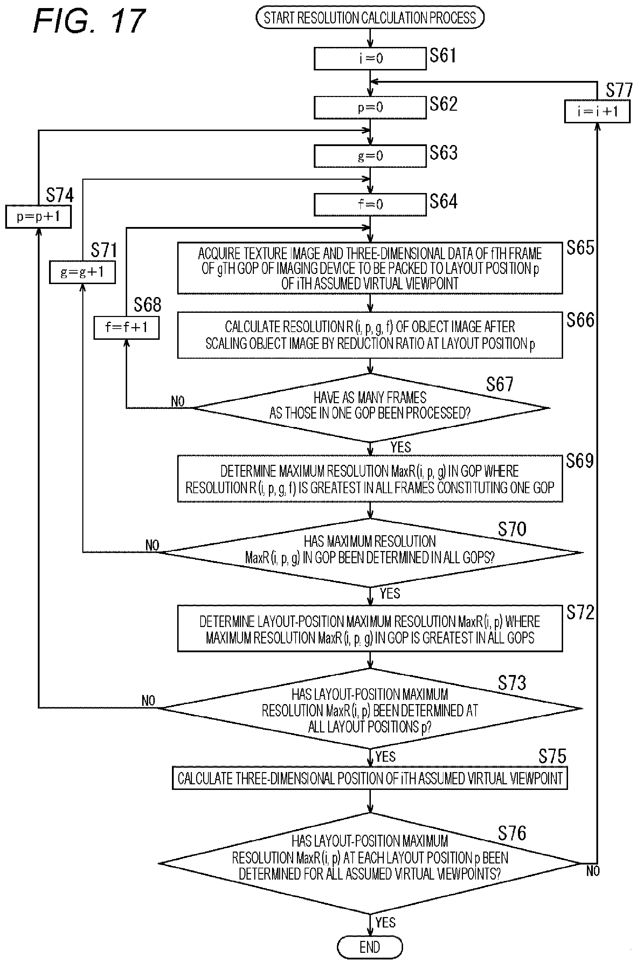

In step S44 of Fig. 15, the image generating device 22 executes a resolution calculation process for calculating the resolution of the object image mapped to each layout position p of the packing image. This resolution calculation process is executed for all of the N assumed virtual viewpoints determined in step S41. The details of the resolution calculation process in step S44 will be described later with reference to Fig. 17.

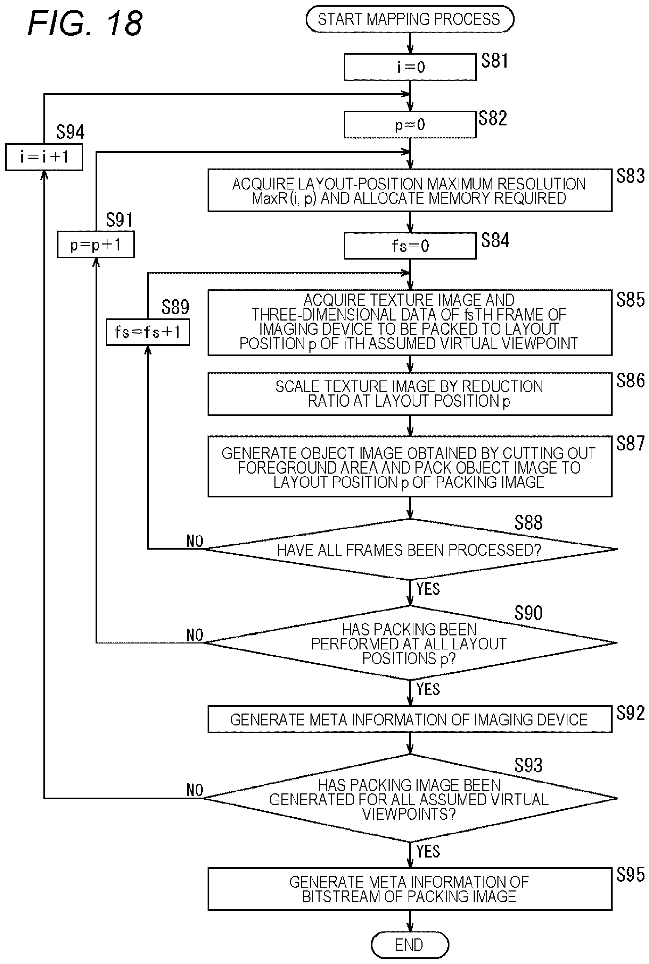

In step S45, the image generating device 22 executes a mapping process of mapping the object image to each layout position p of the packing image. This mapping process is executed for all of the N assumed virtual viewpoints determined in step S41. The details of the mapping process in step S45 will be described later with reference to Fig. 18.

When the mapping process for all of the N assumed virtual viewpoints is terminated by the process of step S45, N packing images for the respective assumed virtual viewpoints are completed, and are supplied to the coding device 23. Thus, the packing image generation process is terminated.

<5. Resolution calculation process>

Next, the details of the resolution calculation process in step S44 of Fig. 15 will be described with reference to the flowchart of Fig. 17.

First, in step S61, the image generating device 22 substitutes 0 for the variable i that identifies the N assumed virtual viewpoints. The variable i is an integer value from 0 to (N-1) (i = 0 to (N-1)). Assumed virtual viewpoints are determined in advance according to the values of the variable i, for example, i = 0 is the front direction, i = 1 is the right-side direction, and so on.

In step S62, the image generating device 22 substitutes 0 for the variable p that identifies the layout position of the packing image. The variable p is an integer value from 0 to (P-1) (p = 0 to (P-1)), and the number of pieces P of object images to be mapped is fixed on the basis of determination of the packing image in step S42 of Fig. 15.

In step S63, the image generating device 22 substitutes 0 for the variable g that identifies the predetermined GOP among a plurality of GOPs constituting the coded stream of the packing image of the predetermined assumed virtual viewpoint (variable i). The variable g is an integer value from 0 to (G-1) (g = 0 to (G-1)), and the number G of GOPs is fixed on the basis of determination of the GOP length in step S43 of Fig. 15.

In step S64, the image generating device 22 substitutes 0 for the variable f that identifies the frame in the predetermined GOP (variable g) of the coded stream of the packing image of the predetermined assumed virtual viewpoint (i). The variable f is an integer value from 0 to (F-1) (f = 0 to (F-1)), and the number F of frames in one GOP is fixed on the basis of determination of the GOP length in step S43 in Fig. 15.

In step S65, the image generating device 22 acquires the texture image (texture data) and the three-dimensional data of the fth frame of the gth GOP of the imaging device 53 to be packed to the layout position p of the ith assumed virtual viewpoint.

In step S66, the image generating device 22 extracts the object as a foreground area from the texture image of the fth frame of the gth GOP of the imaging device 53 to be packed to the layout position p of the ith assumed virtual viewpoint. Then, the image generating device 22 calculates the resolution R (i, p, g, f) of the object image after scaling the object image of the object that has been extracted at the reduction ratio of the layout position p. The resolution R (i, p, g, f) includes the number of pixels in each of the vertical and horizontal directions. Furthermore, in a case where the reduction ratio is the same magnification (1) as in the layout positions p = 0 to 2 in Fig. 7, scaling is not necessary.

In step S67, the image generating device 22 judges whether or not as many frames as those in one GOP have been processed.

In a case where it is judged in step S67 that as many frames as those in one GOP have not yet been processed, the process proceeds to step S68, and the image generating device 22 increments the variable f that identifies the frame by one and then returns the process to step S65. As a result, the processes of steps S65 to S67 described above are repeated for the next frame in one GOP.

In contrast, in a case where it is judged in step S67 that as many frames as those in one GOP have been processed, the process proceeds to step S69, and the image generating device 22 determines a maximum resolution MaxR (i, p, g) in the GOP at which the resolution R (i, p, g, f) of the object image is greatest in all the frames constituting one GOP.

Then, in step S70, the image generating device 22 judges whether the maximum resolution MaxR (i, p, g) in the GOP has been determined in all the GOPs of the texture image of the ith assumed virtual viewpoint.

In a case where it is judged in step S70 that the maximum resolution MaxR (i, p, g) in the GOP has not yet been determined in all the GOPs, the process proceeds to step S71, and the image generating device 22 increments the variable g that identifies the GOP by one and returns the process to step S64. Therefore, the above-described processes of steps S64 to S70 are repeated for the next GOP.

In contrast, in a case where it is judged in step S70 that the maximum resolution MaxR (i, p, g) has been determined for all the GOPs, the process proceeds to step S72, and the image generating device 22 determines, with respect to the layout position p, layout-position maximum resolution MaxR (i, p) at which the maximum resolution MaxR (i, p, g) in the GOP is greatest in all the GOPs.

Then, in step S73, the image generating device 22 judges whether the layout-position maximum resolution MaxR (i, p) has been determined at all the layout positions p = 0 to (P-1).

In a case where it is judged in step S73 that the layout-position maximum resolution MaxR (i, p) has not yet been determined at all the layout positions p = 0 to (P-1), the process proceeds to step S74, and the image generating device 22 increments the variable p that identifies the layout position by one and then returns the process to step S63. Therefore, the above-described processes of steps S63 to S73 are repeated for the next layout position p.

In contrast, in a case where it is judged in step S73 that the layout-position maximum resolution MaxR (i, p) is determined at all the layout positions p = 0 to (P-1), the process proceeds to step S75 and the image generating device 22 calculates the three-dimensional position (x, y, z) of the ith assumed virtual viewpoint on the world coordinate system. The three-dimensional position (x, y, z) of the ith assumed virtual viewpoint on the world coordinate system can be calculated by the following Expression (2).

[Mathematical Expression 1]

$$\text{three-dimensional coordinates (x, y, z) of assumed virtual viewpoint} = \frac{\sum_{p=0}^{P-1}\left\{\left(\begin{array}{c}\text{three-dimensional coordinates (x, y, z) of imaging device packed to layout position p at time of imaging}\end{array}\right) \times \text{(reduction ratio at layout position p)}\right\}}{\sum_{p=0}^{P-1} \text{(reduction ratio at layout position p)}}$$

$$\cdots (2)$$

After the process of step S75, in step S76, the image generating device 22 judges whether or not the layout-position maximum resolution MaxR (i, p) at each layout position p has been determined for all the (N) assumed virtual viewpoints.

In a case where it is judged in step S76 that the layout-position maximum resolution MaxR (i, p) at each layout position p has not yet been determined for all the assumed virtual viewpoints, the process proceeds to step S77, and the image generating device 22 increments the variable i that identifies the assumed virtual viewpoint by one and then returns the process to step S62. As a result, the above-described processes of steps S62 to S76 are repeated for the next assumed virtual viewpoint.

In contrast, in a case where it is judged in step S76 that the layout-position maximum resolution MaxR (i, p) at each layout position p has been determined for all the assumed virtual viewpoints, the resolution calculation process is terminated.

<6. Mapping process>

Next, the details of the mapping process in step S45 of Fig. 15 will be described with reference to the flowchart of Fig. 18.

First, in step S81, the image generating device 22 substitutes 0 for the variable i that identifies the N assumed virtual viewpoints. The variable i is an integer value from 0 to (N-1) (i = 0 to (N-1)).

In step S82, the image generating device 22 substitutes 0 for the variable p that identifies the layout position of the packing image. The variable p is an integer value from 0 to (P-1).

In step S83, the image generating device 22 acquires the layout-position maximum resolution MaxR (i, p) of each layout position p of the ith assumed virtual viewpoint, and allocates memory required for generating the packing image.

In step S84, the image generating device 22 substitutes 0 for the variable fs that identifies the frame constituting the packing image of the ith assumed virtual viewpoint. The variable f that identifies the frame in Fig. 17 is the variable that identifies the frame within a GOP unit, whereas the variable fs corresponds to values allocated in order from 0 to the frames of the bitstream of one packing image.

In step S85, the image generating device 22 acquires the texture image (texture data) and the three-dimensional data of the fsth frame of the imaging device 53 to be packed to the layout position p of the ith assumed virtual viewpoint.

In step S86, the image generating device 22 scales the texture image of the fsth frame of the imaging device 53 to be packed to the layout position p of the ith assumed virtual viewpoint by the reduction ratio at the layout position p.

In step S87, the image generating device 22 generates an object image obtained by cutting out the foreground area of the texture image after the scaling and extracting the object, and packs the object image at the layout position p of the packing image of the fsth frame.

In step S88, the image generating device 22 judges whether all the frames constituting the bitstream of the packing image of the ith assumed virtual viewpoint have been processed.

In a case where it is judged in step S88 that not all the frames constituting the bitstream of the packing image of the ith assumed virtual viewpoint have yet been processed, the process proceeds to step S89, and the image generating device 22 increments the variable fs that identifies the frame by one and returns the process to step S85. As a result, the above-described processes of steps S85 to S88 are repeated for the next frame.

In contrast, in a case where it is judged in step S88 that all the frames constituting the bitstream of the packing image of the ith assumed virtual viewpoint have been processed, the process proceeds to step S90, and the image generating device 22 judges whether the object image has been packed at all the layout positions p = 0 to (P-1) of the packing image of the ith assumed virtual viewpoint.

In a case where it is judged in step S90 that the object images have not yet been packed at all the layout positions p = 0 to (P-1), the process proceeds to step S91, and the image generating device 22 increments the variable p that identifies the layout position by one and returns the process to step S83. Therefore, the above-described processes of steps S83 to S90 are repeated for the next layout position p.

In contrast, in a case where it is judged in step S90 that the object images have been packed at all the layout positions p = 0 to (P-1), the process proceeds to step S92, and the image generating device 22 generates meta information of the imaging device 53 that has imaged the object image that has been packed.

After step S92, in step S93, the image generating device 22 judges whether the packing image has been generated for all the assumed virtual viewpoints.

In a case where it is judged in step S93 that the packing images have not yet been generated for all the assumed virtual viewpoints, the process proceeds to step S94, and the image generating device 22 increments the variable i that identifies the N assumed virtual viewpoints by one and returns the process to step S82. Therefore, the above-described processes of steps S82 to S93 are repeated for the next assumed virtual viewpoint.

In contrast, in a case where it is judged that the packing images have been generated for all the assumed virtual viewpoints, the process proceeds to step S95, and the image generating device 22 generates meta information of the bitstream of the packing image of each of the assumed virtual viewpoints that has been generated and terminates the mapping process.

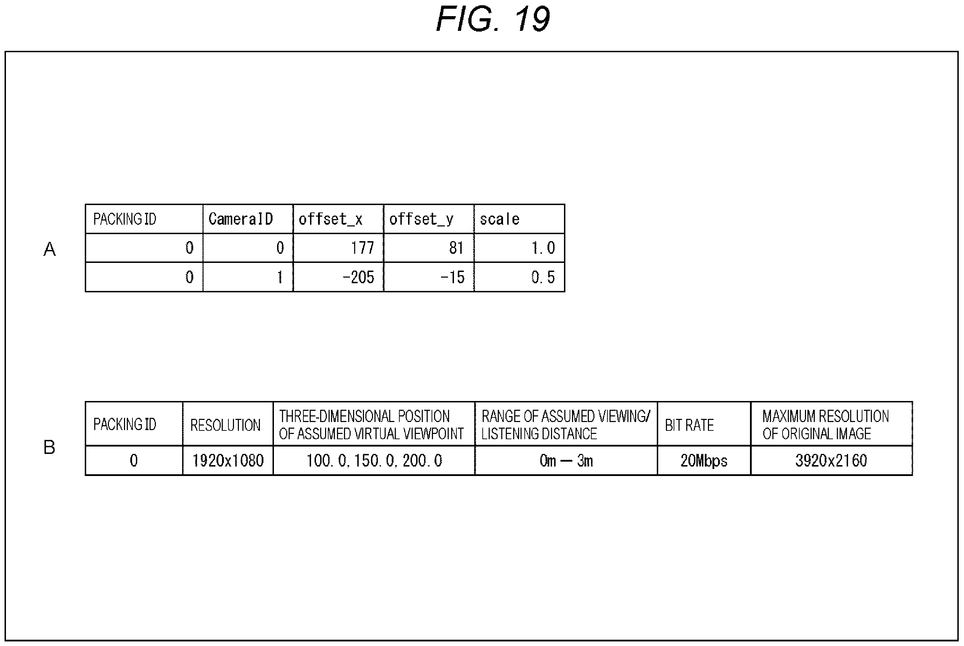

A in Fig. 19 illustrates examples of meta information of the imaging devices 53 generated in step S92 in Fig 18.

The meta information of the imaging device 53 includes respective items of packing ID, camera ID, offset x, offset y, and scale, and the items are generated for each of the assumed virtual viewpoints.

The packing ID is information that identifies the bitstream of the packing image. Therefore, it can be said that the packing ID is information that identifies the assumed virtual viewpoint. As for the packing ID, in a case where the number of assumed virtual viewpoints is 4 (N = 4), meta information of packing ID = 0 to 3 exists.

The camera ID is information that identifies the imaging device 53 that has imaged the object image packed in the packing image. In the example of the packing image of Fig. 7, meta information of camera ID = 0 to 8 exists.

offset x is expressed by offset x = (dst x - src x), and is the amount of deviation between the x-coordinate ($dst\_x$) of the object image packed in the packing image and the x-coordinate (src x) of the original texture image from which the object image has been cut out.

offset y is expressed by offset y = (dst y - src y), and is the amount of deviation between the y-coordinate ($dst\_y$) of the object image packed in the packing image and the y-coordinate (src y) of the original texture image from which the object image has been cut out.

Note that it is assumed that each of the x-coordinate and y-coordinate position ($dst\_x$, $dst\_y$) of the object image packed in the packing image and the x-coordinate and y-coordinate position (src x, $src\_y$) of the original texture image from which the object image has been cut out is upper left coordinates of a rectangle.

scale represents the ratio (compression ratio) between the pixel size of the original texture image from which the object image has been cut out to the pixel size of the object image packed in the packing image. For example, assuming that the width (number of pixels in the x direction) of the rectangle of the object image in the original texture image is srcwidth and the width (number of pixels in the x direction) of the rectangle of the object image packed in the packing image is dst width, scale is expressed by scale = $dst\_width/src\_width$.

B in Fig. 19 illustrates an example of the meta information of the bitstream of the packing image of each assumed virtual viewpoint generated in step S95 of Fig. 18.

The packing ID is information that identifies the bitstream of the packing image. Therefore, it can be said that the packing ID is information that identifies the assumed virtual viewpoint. As for the packing ID, in a case where the number of assumed virtual viewpoints is 4 (N = 4), meta information of packing ID = 0 to 3 exists.

The resolution represents the resolution of the packing image, that is, the number of pixels in the horizontal direction (lateral) and the vertical direction (longitudinal).

The three-dimensional position of the assumed virtual viewpoint represents the position of the virtual viewpoint on the world coordinate system assumed in generation of the packing image.

The range of the assumed viewing/listening distance represents the range of the viewing/listening distance to the object assumed as the usage condition of the packing image.

The bit rate represents the bit rate when the bitstream of the packing image is coded.

The maximum resolution of the original image represents the maximum value of the resolution of the original texture image from which the object image packed in the packing image has not yet been cut out, that is, the texture image output by the imaging device 53.

The meta information of the imaging device 53 and the meta information of the bit stream of the packing image are stored in, for example, the bitstream of the packing image, and are transmitted.

<7. First modification>

Next, a modification of the image processing system 10 will be described. Note that the mode of the above-described image processing system 10 is hereinafter referred to as a basic embodiment.

First, a first modification of the image processing system 10 will be described.

The first modification of the image processing system 10 is an example in which a mipmap scheme is applied to a plurality of types of packing images generated by the distribution side.

In the above-described basic embodiment, the distribution side (distribution device 41) generates a plurality of types (four types) of packing images having different viewing/listening directions with respect to the subject 52; however, the distances to the subject 52 (viewing/listening distance) assumed in the plurality of types of packing images that have been generated are the same.

In the first modification, the distribution side generates a plurality of types of packing images at different viewing/listening distances to the subject 52 in addition to the plurality of types of packing images in different viewing/listening directions.

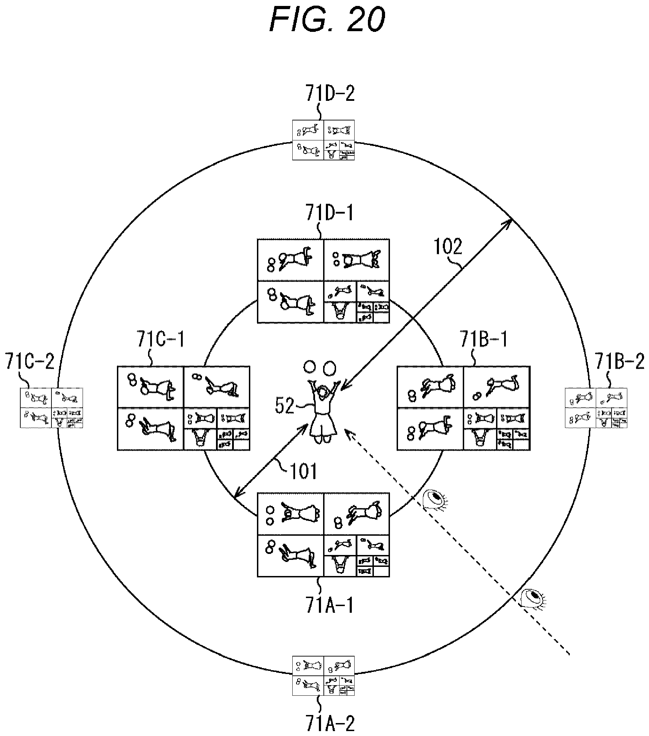

Fig. 20 illustrates an example of the plurality of types of packing images generated in the first modification of the image processing system 10.

In the example of Fig. 20, the directions of the assumed virtual viewpoint are four directions, that is, the front direction, the right-side direction, the back direction, and the left-side direction, similarly in the above-described basic embodiment. However, a difference from the basic embodiment is that as the viewing/listening distances to the object (subject 52), two viewing/listening distances, that is, a first viewing/listening distance 101 and a second viewing/listening distance 102, which is longer than the first viewing/listening distance 101, are set.

In the first modification, with respect to the first viewing/listening distance 101, a first packing image 71A-1 in the front direction, a second packing image 71B-1 in the right-side direction, a third packing image 71C-1 in the left-side direction, and the fourth packing image 71D-1 in the back direction are generated. Furthermore, with respect to the second viewing/listening distance 102, a first packing image 71A-2 in the front direction, a second packing image 71B-2 in the right-side direction, a third packing image 71C-2 in the left-side direction, and a fourth packing image 71D-2 in the back direction are generated.

The reproduction side can switch the bitstream according to the difference in viewing/listening distance by referring to the range of the assumed viewing/listening distance of the meta information of the bitstream of the packing image illustrated in B in Fig. 19.

The resolution of the packing image can be different between the first to fourth packing images 71A-1 to 71D-1 of the first viewing/listening distance 101 and the first to fourth packing images 71A-2 to 71D-2 of the second viewing/listening distance 102. More specifically, the first to fourth packing images 71A-1 to 71D-1 for a short distance (first viewing/listening distance 101) can have a higher resolution, and the first to fourth packing images 71A-2 to 71D-2 for a long distance (second viewing/listening distance 102) can have a lower resolution than that for the short distance. For example, the resolution of the packing image for the long distance can be set by a reduction ratio with respect to the resolution of the packing image for the short distance. For example, the resolution of the packing image for the long distance is set to 1/2 or the like of the resolution for the short distance.

Note that the example of Fig. 20 is an example of generating a plurality of types of packing images assuming two types of viewing/listening distances; however, it is needless to say that packing images may be generated assuming three or more types of viewing/listening distances.

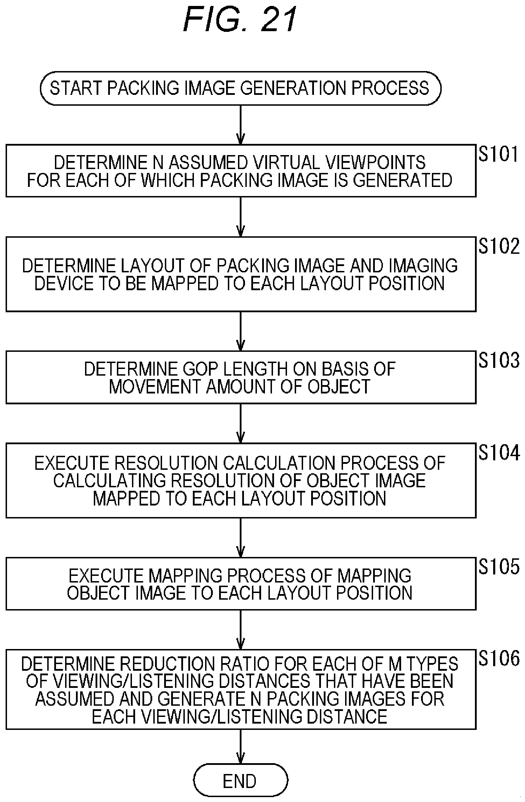

The packing-image generation process of the image generating device 22 in the first modification will be described with reference to the flowchart of Fig. 21.

The packing image generation process of Fig. 21 corresponds to the packing image generation process of the basic embodiment illustrated in Fig. 15. Since the processes of steps S101 to S105 of Fig. 21 are the same as the processes of steps S41 to S45 of Fig. 15, respectively, the description thereof will be omitted.

After step S105, in step S106, the image generating device 22 determines the reduction ratio for each of the M types (M>1) of viewing/listening distances that have been assumed, and generates N packing images for each viewing/listening distance. The N packing images for each viewing/listening distance that have been generated are supplied to the coding device 23, and the packing-image generation process is terminated.

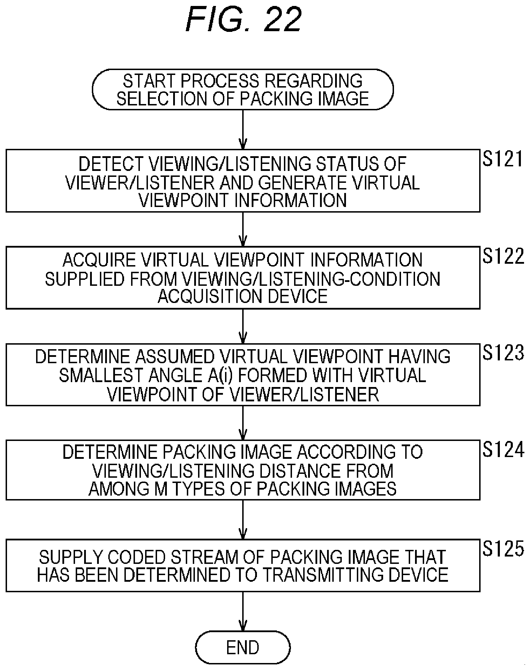

Next, the process related to selection of the packing image in the first modification will be described with reference to the flowchart of Fig. 22.

The flowchart of Fig. 22 corresponds to steps S15 to S17 in the volumetric reproduction process of the basic embodiment illustrated in Fig. 14. In other words, in the first modification, steps S15 to S17 of the flowchart of Fig. 14 are replaced with steps S121 to S125 of the flowchart of Fig 22.

In the process of Fig. 22, in step S121, the viewing/listening-condition acquisition device 35 detects the viewing/listening status of the viewer/listener, generates virtual viewpoint information regarding the virtual viewpoint, and supplies the virtual viewpoint information to the image selecting device 24 and the rendering device 33. Here, the virtual viewpoint information includes the distance (viewing/listening distance) from the virtual camera to the object in addition to the camera parameters of the virtual camera of the basic embodiment.

In step S122, the image selecting device 24 acquires the virtual viewpoint information supplied from the viewing/listening-condition acquisition device 35.

In step S123, the image selecting device 24 determines the assumed virtual viewpoint having the smallest angle A(i) formed with the virtual viewpoint of the viewer/listener from among N assumed virtual viewpoints.

In step S124, the image selecting device 24 determines the packing image according to the viewing/listening distance from among the packing images of M types of viewing/listening distances of the assumed virtual viewpoint that has been determined. Therefore, the optimal packing image for the virtual viewpoint and the viewing/listening distance of the viewer/listener is selected.

In step S125, the image selecting device 24 supplies the coded stream of the packing image that has been determined to the transmitting device 25.

As described above, according to the first modification, it is possible not only to select coded streams corresponding to a plurality of assumed viewpoints according to the position of the virtual viewpoint but also to appropriately select the coded streams also according to the viewing/listening distance, and to transmit the coded streams to the reproduction side. Therefore, in a case where the viewing/listening distance is long, a coded stream with a reduced resolution can be transmitted, and therefore the network band required for transmission can be reduced.

Note that in the above-described example, the layout of the object images to be packed in a packing image is the same for the long-distance use and the short-distance use; however, the layout may differ between the long-distance use and the short-distance use. For example, some object images included in the packing image for the short distance may not be included in the packing image for the long distance. Specifically, in a low-resolution packing image for the long distance, the object image of a viewpoint on the back side of the assumed virtual viewpoint may be omitted.

Furthermore, in the above-described example, the assumed virtual viewpoints of the first to fourth packing images 71A-1 to 71D-1 for the short distance and the assumed virtual viewpoints of the first to fourth packing images 71A-2 to 71D-2 for the long distance are the same; however, the assumed virtual viewpoint for the long distance and the assumed virtual viewpoint for the short distance may differ from each other.

<8. Second modification>

Next, a second modification of the image processing system 10 will be described.

In the second modification, bitstreams of a plurality of types of packing images having different bit rates (coding bit rates) at the time of coding are generated on the distribution side. The reproduction side acquires a bitstream having a coding bit rate according to the network band to perform reproduction and display.

More specifically, the process of step S13 of the flowchart of the packing-image generation process of the basic embodiment illustrated in Fig. 14 is changed from that in the basic embodiment.

As described above, the process of step S13 is a process in which the coding device 23 codes the packing image for each assumed virtual viewpoint supplied from the image generating device 22 by a predetermined coding scheme. In the basic embodiment, the bit rate at the time of coding is a predetermined bit rate such as 20 Mbps set in advance.

In the second modification, in step S13, the coding device 23 codes N packing images having different assumed virtual viewpoints at a plurality of types of coding bit rates. For example, the coding device 23 performs coding at two types of coding bit rates, 20 Mbps and 5 Mbps. The coded stream of the packing image obtained as a result of the coding is supplied from the coding device 23 to the image selecting device 24.

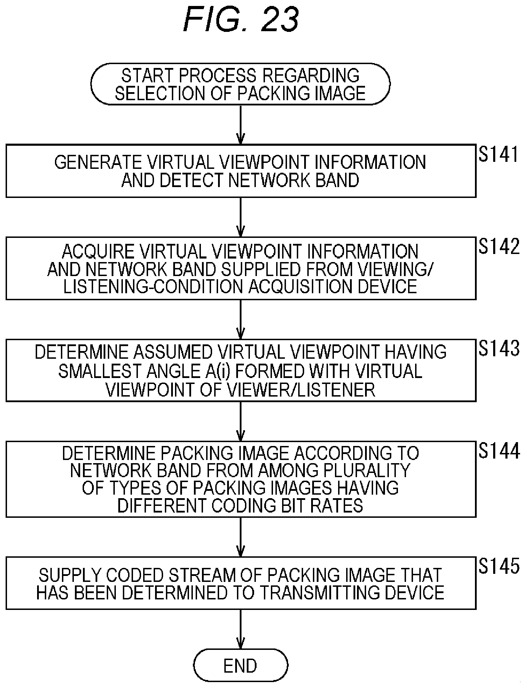

Next, the process related to selection of the packing image in the second modification will be described with reference to the flowchart of Fig. 23.

The flowchart of Fig. 23 corresponds to steps S15 to S17 in the volumetric reproduction process of the basic embodiment illustrated in Fig. 14. In other words, steps S15 to S17 of the flowchart of Fig. 14 are replaced with steps S141 to S145 of the flowchart of Fig. 23.

In the process of Fig. 23, in step S141, the viewing/listening-condition acquisition device 35 generates virtual viewpoint information and detects the network band. That is, the viewing/listening-condition acquisition device 35 detects the viewing/listening status of the viewer/listener and generates virtual viewpoint information regarding the virtual viewpoint. Furthermore, the viewing/listening-condition acquisition device 35 detects the network band of the network through which the coded stream of the packing image is transmitted. The viewing/listening-condition acquisition device 35 supplies the virtual viewpoint information and the network band to the image selecting device 24, and supplies the virtual viewpoint information to the rendering device 33.

In step S142, the image selecting device 24 acquires the virtual viewpoint information and the network band supplied from the viewing/listening-condition acquisition device 35.

In step S143, the image selecting device 24 determines the assumed virtual viewpoint having the smallest angle A(i) formed with the virtual viewpoint of the viewer/listener from among N assumed virtual viewpoints.

In step S144, the image selecting device 24 determines the packing image according to the network band from among a plurality of packing images of the assumed virtual viewpoint that has been determined, that is, a plurality of types of packing images having different coding bit rates. As a result, the optimum packing image for the virtual viewpoint of the viewer/listener and the network band is selected. For example, in a case where two types of coding bit rates, that is, 20 Mbps and 5 Mbps, are prepared, a packing image with the coding bit rate of 20 Mbps is selected in a case where the network band supplied from the viewing/listening-condition acquisition device 35 is equal to or more than a predetermined value, and a packing image with a coding bit rate of 5 Mbps is selected in a case where the coding bit rate is smaller than a predetermined value. In a case where three or more types of coding bit rates are prepared, the packing image with the maximum bit rate that can be transmitted through the current network band is selected.

In step S145, the image selecting device 24 supplies the coded stream of the packing image that has been determined to the transmitting device 25.

As described, according to the second modification, it is possible not only to select the coded streams corresponding to a plurality of assumed virtual viewpoints according to the viewpoint of the viewer/listener (virtual viewpoint) but also to appropriately select the coded streams also according to the network band, and to transmit the coded streams to the reproduction side. Therefore, since the coded stream corresponding to the network band can be transmitted, the object image can be reproduced and displayed with high image quality within the allowable range of the network band.

Note that a combination of the first modification and the second modification is also possible. That is, on the distribution side, while preparing a plurality of types of bitstreams according to the viewing/listening distances, a plurality of types of bitstreams may be prepared for each network band with respect to each viewing/listening distance.

<9. Third modification>

Next, a third modification of the image processing system 10 will be described.

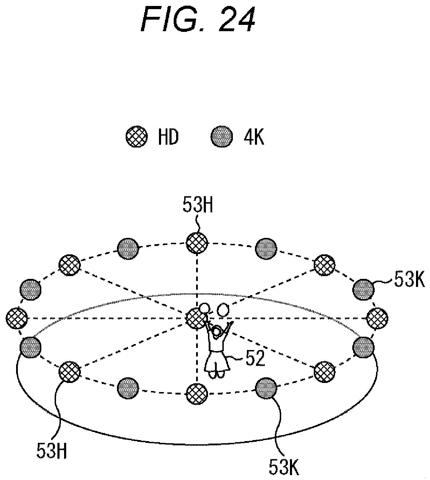

In the third modification, the subject 52 is imaged by using a plurality of types of imaging devices 53 having different resolutions. For example, as illustrated in Fig. 24, the subject 52 is imaged by using an imaging device 53H that captures an image with a resolution of 1920x1080 called High Definition (HD) and an imaging device 53K having a 4K resolution which is four times higher than the resolution of HD. Fig. 24 illustrates an example in which nine images devices 53H image the subject 52 and eight imaging devices 53K image the subject 52.

The processing of the 3D-data generating device 21 of the third modification differs from that in the basic embodiment only in that resolutions of the texture images supplied from the plurality of imaging devices 53 are the same resolution or include different resolutions.

The 3D-data generating device 21 of the third modification generates a 3D model of the object for each resolution at the time of imaging. Specifically, the 3D-data generating device 21 generates a 3D model of the object by using texture images supplied from the imaging devices 53H having the HD resolution and camera parameters corresponding to the imaging devices 53H. Furthermore, the 3D-data generating device 21 generates a 3D model of the object by using the texture images supplied from the imaging devices 53K having the 4K resolution and the camera parameters corresponding to the imaging devices 53K. Then, the 3D-data generating device 21 supplies 3D-model data representing the 3D models that have been generated to the image generating device 22.

The image generating device 22 generates a packing image for each resolution at the time of imaging. In other words, in the third modification, the packing image generation process of the basic embodiment illustrated in Fig. 15 includes two types of processes, that is, a process of generating a packing image by using HD-resolution texture images and a process of generating a packing image by using 4K-resolution texture images.

Note that in the processes in steps S41 to S45 of Fig. 15, the processes that can be applied to both the HD resolution and the 4K resolution can be performed only once.

For example, the process of determining N assumed virtual viewpoints in step S41 can be performed once in a case where the number N of assumed virtual viewpoints is the same for the HD resolution and the 4K resolution. Hereinafter, for the sake of simplicity, it is assumed that the number N of assumed virtual viewpoints is the same for the HD resolution and the 4K resolution.

For example, it is possible that the process of determining the layout of the packing image in step S42 and the imaging device 53 to be mapped to each layout position is performed once in a case where the layout of the packing image and the arrangement of the imaging devices 53 are common.

For example, it is possible that the process of determining the GOP length at the time of coding in step S43 is performed once in a case where the GOP length is the same in the HD resolution and the 4K resolution.

The resolution calculation process in step S44 and the mapping process in step S45 need to be performed for each of the HD resolution and the 4K resolution.

As described, the image generating device 22 of the third modification generates N packing images having different assumed virtual viewpoints by using HD-resolution texture images, generates N packing images having different assumed virtual viewpoints by using 4K-resolution texture images, and supplies the packing images to the coding device 23.

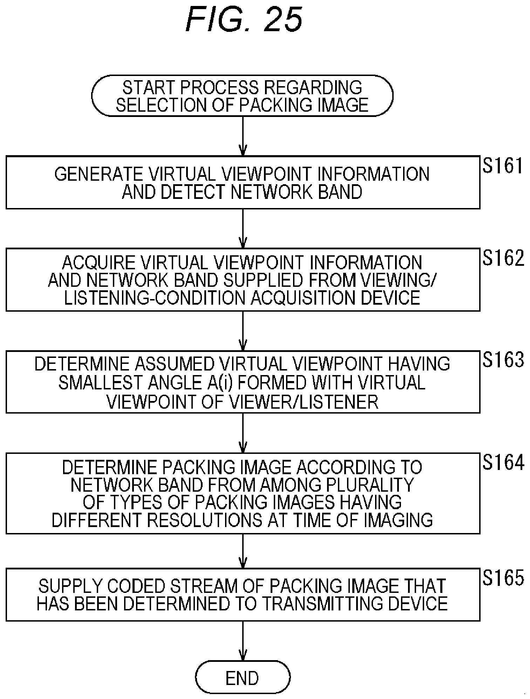

Fig. 25 is a flowchart of the process relating to selection of a packing image in the third modification.

The flowchart of Fig. 25 corresponds to steps S15 to S17 in the volumetric reproduction process of the basic embodiment illustrated in Fig. 14. In other words, steps S15 to S17 of the flowchart of Fig. 14 are replaced with steps S161 to S165 of the flowchart of Fig. 25.

In the process of Fig. 25, in step S161, the viewing/listening-condition acquisition device 35 generates virtual viewpoint information and detects the network band. That is, the viewing/listening-condition acquisition device 35 detects the viewing/listening status of the viewer/listener and generates virtual viewpoint information regarding the virtual viewpoint. Furthermore, the viewing/listening-condition acquisition device 35 detects the network band of the network through which the coded stream of the packing image is transmitted. The viewing/listening-condition acquisition device 35 supplies the virtual viewpoint information and the network band to the image selecting device 24, and supplies the virtual viewpoint information to the rendering device 33.

In step S162, the image selecting device 24 acquires the virtual viewpoint information and the network band supplied from the viewing/listening-condition acquisition device 35.

In step S163, the image selecting device 24 determines the assumed virtual viewpoint having the smallest angle A(i) formed with the virtual viewpoint of the viewer/listener from among the N assumed virtual viewpoints.

In step S164, the image selecting device 24 determines the packing image according to the network band from among a plurality of types of packing images of the assumed virtual viewpoint that have been determined, that is, a plurality of types of packing images having different resolutions at the time of imaging. As a result, the optimum packing image for the virtual viewpoint of the viewer/listener and the network band is selected. For example, in a case where the network band supplied from the viewing/listening-condition acquisition device 35 is equal to or more than a predetermined value, a packing image generated by using the 4K-resolution texture image is selected, and in a case where the network band is smaller than a predetermined value, a packing image generated by using the HD resolution texture image is selected. In a case where three or more resolutions are prepared, packing images with the maximum resolution that can be transmitted in the current network band is selected.

In step S165, the image selecting device 24 supplies the coded stream of the packing image that has been determined to the transmitting device 25.

As described above, according to the third modification, it is possible not only to select the coded streams corresponding to a plurality of assumed virtual viewpoints according to the viewpoint of the viewer/listener (virtual viewpoint) but also to appropriately select the resolution of the packing image also according to the network band, and to transmit the coded streams to the reproduction side. Therefore, since the coded stream corresponding to the network band can be transmitted, the object image can be reproduced and displayed with high image quality within the allowable range of the network band.

It is needless to say that also in the first to third modifications, it is possible to adapt to real-time processing while reducing the amount of data.

<10. Computer configuration example>

The series of processes described above can be performed by hardware or can be performed by software. In a case where the series of processes is performed by software, a program that configures the software is installed on a computer. Here, examples of the computer include a microcomputer incorporated in dedicated hardware, a general-purpose personal computer, for example, that can execute various functions by installing various programs, and the like.

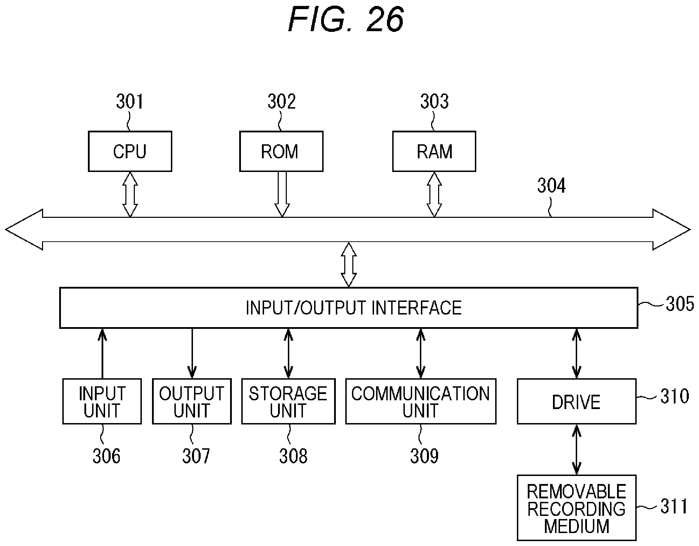

Fig. 26 is a block diagram illustrating an example of a hardware configuration of a computer that executes the series of processes described above according to a program.

In the computer, a central processing unit (CPU) 301, a read only memory (ROM) 302, and a random access memory (RAM) 303 are mutually connected by a bus 304.

Moreover, an input/output interface 305 is connected to the bus 304. An input unit 306, an output unit 307, a storage unit 308, a communication unit 309, and a drive 310 are connected to the input/output interface 305.

The input unit 306 includes a keyboard, a mouse, a microphone, a touch panel, an input terminal, or the like. The output unit 307 includes a display, a speaker, an output terminal, or the like. The storage unit 308 includes a hard disk, a RAM disk, a nonvolatile memory, or the like. The communication unit 309 includes a network interface or the like. The drive 310 drives a removable recording medium 311 such as a magnetic disk, an optical disk, a magneto-optical disk, or a semiconductor memory.

In the computer configured as described above, for example, the CPU 301 loads and executes the program stored in the storage unit 308 into the RAM 303 via the input/output interface 305 and the bus 304 and thus the above-described series of processes is performed. The RAM 303 also appropriately stores data or the like necessary for the CPU 301 to execute various processes.

The program executed by the computer (CPU 301) can be provided by being recorded on, for example, the removable recording medium 311 as a package medium or the like. Furthermore, the program can be provided via a wired or wireless transmission medium such as a local area network, the Internet, or digital satellite broadcasting.

In the computer, the program can be installed into the storage unit 308 via the input/output interface 305 by inserting the removable recording medium 311 into the drive 310. Furthermore, the program can be received by the communication unit 309 via a wired or wireless transmission medium and can be installed in the storage unit 308. In addition, the program can be installed in advance in the ROM 302 or the storage unit 308.

Note that in the present Description, in addition to a case where the steps described in the flowcharts are performed in chronological order according to the described order, the steps may not be necessarily performed in chronological order and may be performed in parallel or at a necessary timing such as upon request.

In the present Description, a system means a set of a plurality of constituents (devices, modules (components), or the like), and it does not matter whether or not all the constituents are in the same case. Therefore, each of a plurality of devices housed in separate cases and connected via a network, and one device in which a plurality of modules is housed in one case is a system.

The embodiments of the present technology are not limited to the above-described embodiment, and various modifications can be made without departing from the scope of the present technology.

For example, in the above-described embodiment, regarding transmission of geometry information of an object, transmission in any format such as a depth image, a point cloud, a polygon mesh, or the like is possible, and thus the description thereof is omitted. In a case where geometry information is transmitted as a depth image, one packing image may be generated from a plurality of depth images supplied from the plurality of imaging device 53 and may be transmitted to the reproduction side similarly to the texture images described above. That is, the technology of generating object images from the texture images captured by the plurality of respective imaging devices 53, and packing the object images to generate and transmit the packing image can also be applied to depth images.

The image generating device 22 (generation unit) generates a plurality of types of packing images in each of which a plurality of object images captured in different directions is packed into one piece of image. Here, one piece of packing image has a configuration in which at least some of the resolutions of the plurality of object images are different. The image selecting device 24 (selection unit) selects one of the plurality of types of packing images and outputs the packing image that has been selected to the reproduction side. The object image here is a cropped image obtained by extracting only the object area from a texture image, or a cropped image obtained by extracting only the object area from a depth image.

For example, a mode in which all or some of the portions of the above-described embodiment are combined may be adopted. For example, a mode in which the first modification and the second modification are combined, a mode in which the second modification and the third modification are combined, and a mode in which the first modification and the third modification are combined can be adopted.

For example, the present technology can adopt a configuration of cloud computing in which one function is shared and processed jointly by a plurality of devices via a network.

Furthermore, each step described in the above-described flowcharts can be executed by one device, or can be shared and executed by a plurality of devices.

Moreover, in a case where a plurality of processes is included in one step, the plurality of processes included in the one step can be executed by one device, or can be shared and executed by a plurality of devices.

Note that the effects described in the present Description is an illustration only and not limited, and may have effects other than the effects described in the present Description.

Note that the present technology can be configured as follows.

(1)
An image processing device including

a generation unit that generates a first packing image obtained by packing in one frame a first object image in which an object faces a first direction and a second object image in which the object faces a second direction different from the first direction among a plurality of images in which the object is imaged in different directions in such a way that a resolution of the first object image is higher than a resolution of the second object image, the generation unit further generating a second packing image obtained by packing in one frame a third object image in which the object faces a third direction different from the first direction and a fourth object image in which the object faces a fourth direction different from the third direction among the plurality of images in which the object is imaged in different directions in such a way that a resolution of the third object image is higher than a resolution of the fourth object image.

(2)
The image processing device according to the (1),

in which the first direction is a direction closer to an assumed virtual viewpoint, which is a virtual viewpoint assumed on a reproduction side, than the second direction is, and
the third direction is a direction closer to the assumed virtual viewpoint than the fourth direction is.

(3)
The image processing device according to the (1) or (2),
in which the generation unit generates a plurality of types of the first packing image and the second packing image at different distances from a virtual viewpoint assumed on a reproduction side to the object.

(4)
The image processing device according to the (3),

in which the distance includes a first distance and a second distance longer than the first distance, and a resolution of a tile image differs between the first packing image at the first distance and the first packing image at the second distance.

(5)
The image processing device according to the (3) or (4),

in which the distance includes a first distance and a second distance longer than the first distance, and layout of a packing image differs between the first packing image at the first distance and the first packing image at the second distance.

(6)
The image processing device according to the (5),
in which a number of pieces of object images of the packing image at the second distance is smaller than a number of pieces of object images of the packing image at the first distance.

(7)
The image processing device according to any one of the (1) to (6),
in which the generation unit generates a plurality of types of the first packing images and the second packing images with different bit rates at a time of coding.

(8) (7),
The image processing device according to any one of the (1) to
in which the generation unit generates a plurality of types of the first packing images and the second packing images with different resolutions at a time when the imaging device performs imaging.

(9)
The image processing device according to any one of the (1) to (8) further including
a selection unit that selects the first packing image or the second packing image according to a viewing/listening condition.

(10)
The image processing device according to the (9),
in which the viewing/listening condition is an angle between an assumed virtual viewpoint, which is a virtual viewpoint assumed by each of the first packing image or the second packing image and an actual virtual viewpoint of a viewer/listener.

(11)
The image processing device according to the (9) or (10),
in which the viewing/listening condition is a viewing/listening distance, which is a distance from a viewer/listener to the object.

(12)
The image processing device according to any one of the (1) to (11),
in which a resolution of the first object image of the first packing image and a resolution of the third object image of the second packing image are identical.

(13)
The image processing device according to any one of the (1) to (12),
in which resolutions of the first object image and the second object image that constitute the first packing image change by a GOP.

(14)
The image processing device according to any one of the (1) to (13),

in which the first packing image includes a plurality of the first object images and a plurality of the second object images, and
the second packing image includes a plurality of the third object images and a plurality of the fourth object images.

(15)

The image processing device according to any one of the (1) to (14),
in which the first packing image and the second packing image are generated in association with a viewing/listening direction of a user.

(16)

The image processing device according to any one of the (9) to (15) further including
a transmission unit that transmits the first packing image or the second packing image selected by the selection unit to a reproduction side via a network.

(17)

An image generation method including generating a plurality of packing images by an image processing device through a first generation step and a second generation step,

in which in the first generation step, a first packing image obtained by packing in one frame a first object image in which an object faces a first direction and a second object image in which the object faces a second direction different from the first direction among a plurality of images in which the object is imaged in different directions in such a way that a resolution of the first object image is higher than a resolution of the second object image is generated, and
in the second generation step, a second packing image obtained by packing in one frame a third object image in which the object faces a third direction different from the first direction and a fourth object image in which the object faces a fourth direction different from the third direction among a plurality of images in which the object is imaged in different directions in such a way that a resolution of the third object image is higher than a resolution of the fourth object image is generated.

(18)

An image processing device including

a rendering unit that acquires a first packing image or a second packing image and generates as a display image a virtual viewpoint image in which an object is viewed from a viewpoint of a viewer/listener,
the first packing image being a packing image obtained by packing in one frame a first object image in which an object faces a first direction and a second object image in which the object faces a second direction different from the first direction among a plurality of images in which the object is imaged in different directions in such a way that a resolution of the first object image is higher than a resolution of the second object image, and
the second packing image being a packing image obtained by packing in one frame a third object image in which the object faces a third direction different from the first direction and a fourth object image in which the object faces a fourth direction different from the third direction among the plurality of images in which the object is imaged in different directions in such a way that a resolution of the third object image is higher than a resolution of the fourth object image.

(19)

An image processing method including

acquiring, by an image processing device, a first packing image or a second packing image and generating as a display image a virtual viewpoint image in which an object is viewed from a viewpoint of a viewer/listener,
the first packing image being a packing image obtained by packing in one frame a first object image in which the object faces a first direction and a second object image in which the object faces a second direction different from the first direction among a plurality of images in which the object is imaged in different directions in such a way that a resolution of the first object image is higher than a resolution of the second object image, and
the second packing image being a packing image obtained by packing in one frame a third object image in which the object faces a third direction different from the first direction and a fourth object image in which the object faces a fourth direction different from the third direction among a plurality of images in which the object is imaged in different directions in such a way that a resolution of the third object image is higher than a resolution of the fourth object image.

REFERENCE SIGNS LIST

10          Image processing system

| 22 | Image generating device |
|---|---|
| 24 | Image selecting device |
| 25 | Transmitting device |
| 31 | Receiving device |
| 33 | Rendering device |
| 34 | Display device |
| 35 | Viewing/listening-condition acquisition device |
| 41 | Distribution device |
| 42 | Reproduction device |
| 51 | Imaging space |
| 52 | Subject |
| 53 | Imaging device |
| 71A to 71D | First to fourth packing images |
| 101 | First viewing/listening distance |
| 102 | Second viewing/listening distance |
| 301 | CPU |
| 302 | ROM |
| 303 | RAM |
| 306 | Input unit |
| 307 | Output unit |
| 308 | Storage unit |
| 309 | Communication unit |
| 310 | Drive |

**Claims**

1. An image processing device comprising

   a generation unit that generates a first packing image obtained by packing in one frame a first object image in which an object faces a first direction and a second object image in which the object faces a second direction different from the first direction among a plurality of images in which the object is imaged in different directions in such a way that a resolution of the first object image is higher than a resolution of the second object image, the generation unit further generating a second packing image obtained by packing in one frame a third object image in which the object faces a third direction different from the first direction and a fourth object image in which the object faces a fourth direction different from the third direction among the plurality of images in which the object is imaged in different directions in such a way that a resolution of the third object image is higher than a resolution of the fourth object image.

2. The image processing device according to claim 1,

   wherein the first direction is a direction closer to an assumed virtual viewpoint, which is a virtual viewpoint assumed on a reproduction side, than the second direction is, and
   the third direction is a direction closer to the assumed virtual viewpoint than the fourth direction is.

3. The image processing device according to claim 1,
   wherein the generation unit generates a plurality of types of the first packing images and the second packing images at different distances from a virtual viewpoint assumed on a reproduction side to the object.

4. The image processing device according to claim 3,

   wherein the distance includes a first distance and a second distance longer than the first distance, and
   a resolution of a tile image differs between the first packing image at the first distance and the first packing image at the second distance.

5. The image processing device according to claim 3,

   wherein the distance includes a first distance and a second distance longer than the first distance, and

layout of a packing image differs between the first packing image at the first distance and the first packing image at the second distance.

6. The image processing device according to claim 5,
wherein a number of pieces of object images of the packing image at the second distance is smaller than a number of pieces of object images of the packing image at the first distance.

7. The image processing device according to claim 1,
wherein the generation unit generates a plurality of types of the first packing images and the second packing images with different bit rates at a time of coding.

8. The image processing device according to claim 1,
wherein the generation unit generates a plurality of types of the first packing images and the second packing images with different resolutions at a time when the imaging device performs imaging.

9. The image processing device according to claim 1 further comprising
a selection unit that selects the first packing image or the second packing image according to a viewing/listening condition.

10. The image processing device according to claim 9,
wherein the viewing/listening condition is an angle between an assumed virtual viewpoint, which is a virtual viewpoint assumed by each of the first packing image or the second packing image and an actual virtual viewpoint of a viewer/listener.

11. The image processing device according to claim 9,
wherein the viewing/listening condition is a viewing/listening distance, which is a distance from a viewer/listener to the object.

12. The image processing device according to claim 1,
wherein a resolution of the first object image of the first packing image and a resolution of the third object image of the second packing image are identical.

13. The image processing device according to claim 1,
wherein resolutions of the first object image and the second object image constituting the first packing image change by a GOP.

14. The image processing device according to claim 1,

wherein the first packing image includes a plurality of the first object images and a plurality of the second object images, and
the second packing image includes a plurality of the third object images and a plurality of the fourth object images.

15. The image processing device according to claim 1,
wherein the first packing image and the second packing image are generated in association with a viewing/listening direction of a user.

16. The image processing device according claim 9 further comprising
a transmission unit that transmits the first packing image or the second packing image selected by the selection unit to a reproduction side via a network.

17. An image generation method comprising generating a plurality of packing images by an image processing device through a first generation step and a second generation step,

wherein in the first generation step of generating a first packing image obtained by packing in one frame a first object image in which an object faces a first direction and a second object image in which the object faces a second direction different from the first direction among a plurality of images in which the object is imaged in different directions in such a way that a resolution of the first object image is higher than a resolution of the second object image is generated, and

in the second generation step, a second packing image obtained by packing in one frame a third object image in which the object faces a third direction different from the first direction and a fourth object image in which the object faces a fourth direction different from the third direction among a plurality of images in which the object is imaged in different directions in such a way that a resolution of the third object image is higher than a resolution of the fourth object image is generated.

18. An image processing device comprising
a rendering unit that acquires a first packing image or a second packing image and generates as a display image a virtual viewpoint image in which an object is viewed from a viewpoint of a viewer/listener,

the first packing image being a packing image obtained by packing in one frame a first object image in which the object faces a first direction and a second object image in which the object faces a second direction different from the first direction among a plurality of images in which the object is imaged in different directions in such a way that a resolution of the first object image is higher than a resolution of the second object image, and
the second packing image being a packing image obtained by packing in one frame a third object image in which the object faces a third direction different from the first direction and a fourth object image in which the object faces a fourth direction different from the third direction among the plurality of images in which the object is imaged in different directions in such a way that a resolution of the third object image is higher than a resolution of the fourth object image.

19. An image processing method comprising

acquiring, by an image processing device, a first packing image or a second packing image and generating as a display image a virtual viewpoint image in which an object is viewed from a viewpoint of a viewer/listener,
the first packing image being a packing image obtained by packing in one frame a first object image in which the object faces a first direction and a second object image in which the object faces a second direction different from the first direction among a plurality of images in which the object is imaged in different directions in such a way that a resolution of the first object image is higher than a resolution of the second object image, and
the second packing image being a packing image obtained by packing in one frame a third object image in which the object faces a third direction different from the first direction and a fourth object image in which the object faces a fourth direction different from the third direction among the plurality of images in which the object is imaged in different directions in such a way that a resolution of the third object image is higher than a resolution of the fourth object image.

# FIG. 1

EP 3 937 499 A1

*FIG. 2*

10

41

21 22 23 24 25

| 3D-DATA GENERATING DEVICE | → | IMAGE GENERATING DEVICE | → | CODING DEVICE | → | IMAGE SELECTING DEVICE | → | TRANSMITTING DEVICE |

35

VIEWING/LISTENING CONDITION ACQUISITION DEVICE

31 32 33 34

| RECEIVING DEVICE | → | DECODING DEVICE | → | RENDERING DEVICE | → | DISPLAY DEVICE |

42

EP 3 937 499 A1

FIG. 3

EP 3 937 499 A1

FIG. 4

EP 3 937 499 A1

FIG. 5

EP 3 937 499 A1

FIG. 6

EP 3 937 499 A1

# FIG. 7

# FIG. 8

FIG. 9

EP 3 937 499 A1

## FIG. 10

| | | | |
|---|---|---|---|
| 71B | RIGHT-SIDE DIRECTION | | |
| 71A | FRONT DIRECTION | | |
| 71C | LEFT-SIDE DIRECTION | | |
| 71D | BACK DIRECTION | | |

t11   t12   t21   t31   t41

SWITCH VIEWPOINT

STREAM IS SWITCHED AT HEAD OF GOP

EP 3 937 499 A1

FIG. 11

| p=0 | p=1 | p=2 |

| p=3 | p=4 | p=5 | p=6 | p=7 |
| | p=8 | p=9 | p=10 | p=11 | p=12 | p=13 |

EP 3 937 499 A1

# FIG. 12

PACKING 4

PACKING 5

PACKING 3

PACKING 6

PACKING 2

PACKING 7

PACKING 1

PACKING 0

53

52

53

## FIG. 13

$$A(i) = \arccos(C_i \cdot C_v)$$

# FIG. 14

```
START VOLUMETRIC REPRODUCTION PROCESS
```

| GENERATE 3D-MODEL DATA OF EACH OBJECT | S11 |

| GENERATE PACKING IMAGE FOR EACH ASSUMED VIRTUAL VIEWPOINT | S12 |

| CODE PACKING IMAGE FOR EACH ASSUMED VIRTUAL VIEWPOINT BY PREDETERMINED CODING SCHEME | S13 |

| STORE CODED STREAM OF PACKING IMAGE FOR EACH ASSUMED VIRTUAL VIEWPOINT | S14 |

| DETECT VIEWING/LISTENING STATUS OF VIEWER/LISTENER AND GENERATE VIRTUAL VIEWPOINT INFORMATION | S15 |

| ACQUIRE VIRTUAL VIEWPOINT INFORMATION SUPPLIED FROM VIEWING/LISTENING CONDITION ACQUISITION DEVICE | S16 |

| SELECT PREDETERMINED ONE CODED STREAM FROM AMONG CODED STREAMS OF PLURALITY OF PACKING IMAGES | S17 |

| TRANSMIT CODED STREAM OF PACKING IMAGE THAT HAS BEEN SELECTED | S18 |

| RECEIVE CODED STREAM OF PACKING IMAGE | S19 |

| DECODE CODED STREAM OF PACKING IMAGE | S20 |

| GENERATE AS DISPLAY IMAGE VIRTUAL VIEWPOINT IMAGE IN WHICH OBJECT IS VIEWED FROM VIRTUAL VIEWPOINT AND DISPLAY VIRTUAL VIEWPOINT IMAGE ON DISPLAY DEVICE | S21 |

```
END
```

# FIG. 15

```
START PACKING IMAGE GENERATION PROCESS
```

DETERMINE N ASSUMED VIRTUAL VIEWPOINTS
FOR EACH OF WHICH PACKING IMAGE IS GENERATED — S41

DETERMINE LAYOUT OF PACKING IMAGE AND IMAGING
DEVICE TO BE MAPPED TO EACH LAYOUT POSITION — S42

DETERMINE GOP LENGTH ON BASIS OF
MOVEMENT AMOUNT OF OBJECT — S43

EXECUTE RESOLUTION CALCULATION PROCESS OF
CALCULATING RESOLUTION OF OBJECT IMAGE
MAPPED TO EACH LAYOUT POSITION — S44

EXECUTE MAPPING PROCESS OF MAPPING
OBJECT IMAGE TO EACH LAYOUT POSITION — S45

```
END
```

# FIG. 16

MOVE ABOUT 3 METERS FORWARD

IN CASE WHERE MOVEMENT AMOUNT IS GREAT

IN CASE WHERE MOVEMENT AMOUNT IS PREDETERMINED THRESHOLD OR MORE

IT IS NECESSARY TO SECURE RESOLUTION FOR MOVEMENT AMOUNT OF ABOUT 3 METERS

RESOLUTION FOR MOVEMENT IN 1GOP IS ENOUGH

1GOP = 100 FRAMES

1GOP = 30 FRAMES

EP 3 937 499 A1

## FIG. 17

(START RESOLUTION CALCULATION PROCESS)

$i = 0$ — S61

$p = 0$ — S62

$g = 0$ — S63

$f = 0$ — S64

S74
$p = p+1$

S71
$g = g+1$

ACQUIRE TEXTURE IMAGE AND THREE-DIMENSIONAL DATA OF fTH FRAME OF gTH GOP OF IMAGING DEVICE TO BE PACKED TO LAYOUT POSITION p OF iTH ASSUMED VIRTUAL VIEWPOINT — S65

S68
$f = f+1$

CALCULATE RESOLUTION R (i, p, g, f) OF OBJECT IMAGE AFTER SCALING OBJECT IMAGE BY REDUCTION RATIO AT LAYOUT POSITION p — S66

S67
HAVE AS MANY FRAMES AS THOSE IN ONE GOP BEEN PROCESSED? — NO

YES

DETERMINE MAXIMUM RESOLUTION MaxR (i, p, g) IN GOP WHERE RESOLUTION R (i, p, g, f) IS GREATEST IN ALL FRAMES CONSTITUTING ONE GOP — S69

S70
HAS MAXIMUM RESOLUTION MaxR (i, p, g) IN GOP BEEN DETERMINED IN ALL GOPS? — NO

YES

DETERMINE LAYOUT-POSITION MAXIMUM RESOLUTION MaxR (i, p) WHERE MAXIMUM RESOLUTION MaxR (i, p, g) IN GOP IS GREATEST IN ALL GOPS — S72

S73
HAS LAYOUT-POSITION MAXIMUM RESOLUTION MaxR (i, p) BEEN DETERMINED AT ALL LAYOUT POSITIONS p? — NO

YES

CALCULATE THREE-DIMENSIONAL POSITION OF iTH ASSUMED VIRTUAL VIEWPOINT — S75

S76
HAS LAYOUT-POSITION MAXIMUM RESOLUTION MaxR (i, p) AT EACH LAYOUT POSITION p BEEN DETERMINED FOR ALL ASSUMED VIRTUAL VIEWPOINTS? — NO

S77
$i = i+1$

YES

(END)

# FIG. 18

START MAPPING PROCESS

S81   i = 0

S82   p = 0

S94   i = i + 1

S83   ACQUIRE LAYOUT-POSITION MAXIMUM RESOLUTION MaxR(i, p) AND ALLOCATE MEMORY REQUIRED

S91   p = p + 1

S84   fs = 0

S89   fs = fs + 1

S85   ACQUIRE TEXTURE IMAGE AND THREE-DIMENSIONAL DATA OF fsTH FRAME OF IMAGING DEVICE TO BE PACKED TO LAYOUT POSITION p OF iTH ASSUMED VIRTUAL VIEWPOINT

S86   SCALE TEXTURE IMAGE BY REDUCTION RATIO AT LAYOUT POSITION p

S87   GENERATE OBJECT IMAGE OBTAINED BY CUTTING OUT FOREGROUND AREA AND PACK OBJECT IMAGE TO LAYOUT POSITION p OF PACKING IMAGE

S88   HAVE ALL FRAMES BEEN PROCESSED? — NO / YES

S90   HAS PACKING BEEN PERFORMED AT ALL LAYOUT POSITIONS p? — NO / YES

S92   GENERATE META INFORMATION OF IMAGING DEVICE

S93   HAS PACKING IMAGE BEEN GENERATED FOR ALL ASSUMED VIRTUAL VIEWPOINTS? — NO / YES

S95   GENERATE META INFORMATION OF BITSTREAM OF PACKING IMAGE

END

## FIG. 19

A

| PACKING ID | CameraID | offset_x | offset_y | scale |
|---|---|---|---|---|
| 0 | 0 | 177 | 81 | 1.0 |
| 0 | 1 | −205 | −15 | 0.5 |

B

| PACKING ID | RESOLUTION | THREE-DIMENSIONAL POSITION OF ASSUMED VIRTUAL VIEWPOINT | RANGE OF ASSUMED VIEWING/ LISTENING DISTANCE | BIT RATE | MAXIMUM RESOLUTION OF ORIGINAL IMAGE |
|---|---|---|---|---|---|
| 0 | 1920x1080 | 100. 0. 150. 0. 200. 0 | 0m — 3m | 20Mbps | 3920x2160 |

EP 3 937 499 A1

# FIG. 20

# FIG. 21

START PACKING IMAGE GENERATION PROCESS

DETERMINE N ASSUMED VIRTUAL VIEWPOINTS FOR EACH OF WHICH PACKING IMAGE IS GENERATED — S101

DETERMINE LAYOUT OF PACKING IMAGE AND IMAGING DEVICE TO BE MAPPED TO EACH LAYOUT POSITION — S102

DETERMINE GOP LENGTH ON BASIS OF MOVEMENT AMOUNT OF OBJECT — S103

EXECUTE RESOLUTION CALCULATION PROCESS OF CALCULATING RESOLUTION OF OBJECT IMAGE MAPPED TO EACH LAYOUT POSITION — S104

EXECUTE MAPPING PROCESS OF MAPPING OBJECT IMAGE TO EACH LAYOUT POSITION — S105

DETERMINE REDUCTION RATIO FOR EACH OF M TYPES OF VIEWING/LISTENING DISTANCES THAT HAVE BEEN ASSUMED AND GENERATE N PACKING IMAGES FOR EACH VIEWING/LISTENING DISTANCE — S106

END

# FIG. 22

```
START PROCESS REGARDING
SELECTION OF PACKING IMAGE
```

DETECT VIEWING/LISTENING STATUS OF
VIEWER/LISTENER AND GENERATE VIRTUAL
VIEWPOINT INFORMATION — S121

ACQUIRE VIRTUAL VIEWPOINT INFORMATION
SUPPLIED FROM VIEWING/LISTENING-CONDITION
ACQUISITION DEVICE — S122

DETERMINE ASSUMED VIRTUAL VIEWPOINT HAVING
SMALLEST ANGLE A(i) FORMED WITH VIRTUAL
VIEWPOINT OF VIEWER/LISTENER — S123

DETERMINE PACKING IMAGE ACCORDING TO
VIEWING/LISTENING DISTANCE FROM
AMONG M TYPES OF PACKING IMAGES — S124

SUPPLY CODED STREAM OF PACKING IMAGE THAT
HAS BEEN DETERMINED TO TRANSMITTING DEVICE — S125

```
END
```

# FIG. 23

```
        ┌─────────────────────────────────┐
        │    START PROCESS REGARDING      │
        │   SELECTION OF PACKING IMAGE    │
        └─────────────────────────────────┘
                       │
                       ▼
┌──────────────────────────────────────────────────┐ S141
│      GENERATE VIRTUAL VIEWPOINT INFORMATION       │
│            AND DETECT NETWORK BAND                 │
└──────────────────────────────────────────────────┘
                       │
                       ▼
┌──────────────────────────────────────────────────┐ S142
│        ACQUIRE VIRTUAL VIEWPOINT INFORMATION      │
│     AND NETWORK BAND SUPPLIED FROM VIEWING/       │
│      LISTENING-CONDITION ACQUISITION DEVICE       │
└──────────────────────────────────────────────────┘
                       │
                       ▼
┌──────────────────────────────────────────────────┐ S143
│    DETERMINE ASSUMED VIRTUAL VIEWPOINT HAVING     │
│      SMALLEST ANGLE A(i) FORMED WITH VIRTUAL      │
│        VIEWPOINT OF VIEWER/LISTENER               │
└──────────────────────────────────────────────────┘
                       │
                       ▼
┌──────────────────────────────────────────────────┐ S144
│       DETERMINE PACKING IMAGE ACCORDING TO        │
│      NETWORK BAND FROM AMONG PLURALITY            │
│        OF TYPES OF PACKING IMAGES HAVING          │
│          DIFFERENT CODING BIT RATES               │
└──────────────────────────────────────────────────┘
                       │
                       ▼
┌──────────────────────────────────────────────────┐ S145
│     SUPPLY CODED STREAM OF PACKING IMAGE THAT     │
│     HAS BEEN DETERMINED TO TRANSMITTING DEVICE    │
└──────────────────────────────────────────────────┘
                       │
                       ▼
                  ┌─────────┐
                  │   END   │
                  └─────────┘
```

## FIG. 24

# FIG. 25

```
┌─────────────────────────────────┐
│     START PROCESS REGARDING      │
│    SELECTION OF PACKING IMAGE    │
└─────────────────────────────────┘
                 │
                 ▼
┌───────────────────────────────────────────────┐ S161
│     GENERATE VIRTUAL VIEWPOINT INFORMATION     │
│           AND DETECT NETWORK BAND              │
└───────────────────────────────────────────────┘
                 │
                 ▼
┌───────────────────────────────────────────────┐ S162
│      ACQUIRE VIRTUAL VIEWPOINT INFORMATION     │
│    AND NETWORK BAND SUPPLIED FROM VIEWING/     │
│     LISTENING-CONDITION ACQUISITION DEVICE     │
└───────────────────────────────────────────────┘
                 │
                 ▼
┌───────────────────────────────────────────────┐ S163
│   DETERMINE ASSUMED VIRTUAL VIEWPOINT HAVING   │
│     SMALLEST ANGLE A(i) FORMED WITH VIRTUAL    │
│       VIEWPOINT OF VIEWER/LISTENER             │
└───────────────────────────────────────────────┘
                 │
                 ▼
┌───────────────────────────────────────────────┐ S164
│     DETERMINE PACKING IMAGE ACCORDING TO       │
│      NETWORK BAND FROM AMONG PLURALITY         │
│       OF TYPES OF PACKING IMAGES HAVING        │
│    DIFFERENT RESOLUTIONS AT TIME OF IMAGING    │
└───────────────────────────────────────────────┘
                 │
                 ▼
┌───────────────────────────────────────────────┐ S165
│  SUPPLY CODED STREAM OF PACKING IMAGE THAT     │
│   HAS BEEN DETERMINED TO TRANSMITTING DEVICE   │
└───────────────────────────────────────────────┘
                 │
                 ▼
             ┌───────┐
             │  END  │
             └───────┘
```

## FIG. 26

```
      301              302              303
      CPU              ROM              RAM                    304

                                                    INPUT/OUTPUT INTERFACE          305

   INPUT    OUTPUT   STORAGE   COMMUNICATION          DRIVE          310
   UNIT     UNIT     UNIT      UNIT

   306      307      308       309

                                        REMOVABLE
                                        RECORDING          311
                                        MEDIUM
```

EP 3 937 499 A1

## INTERNATIONAL SEARCH REPORT

| International application No. |
| --- |
| PCT/JP2020/006790 |

**A. CLASSIFICATION OF SUBJECT MATTER**
Int.Cl. H04N19/597(2014.01)i, H04N19/85(2014.01)i
FI: H04N19/85, H04N19/597

According to International Patent Classification (IPC) or to both national classification and IPC

**B. FIELDS SEARCHED**

Minimum documentation searched (classification system followed by classification symbols)
Int.Cl. H04N19/00-19/98

Documentation searched other than minimum documentation to the extent that such documents are included in the fields searched
Published examined utility model applications of Japan     1922-1996
Published unexamined utility model applications of Japan   1971-2020
Registered utility model specifications of Japan           1996-2020
Published registered utility model applications of Japan   1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y<br>A | WO 2016/140060 A1 (SONY CORPORATION) 09.09.2016<br>(2016-09-09), paragraphs [0028]-[0190], fig. 1-17 | 1-4, 7-19<br>5-6 |
| Y<br>A | WO 2018/150933 A1 (SONY CORPORATION) 23.08.2018<br>(2018-08-23), paragraphs [0034]-[0045], fig. 1-3 | 1-4, 7-19<br>5-6 |
| A | WO 2019/003953 A1 (SONY CORPORATION) 03.01.2019<br>(2019-01-03), entire text, all drawings | 1-19 |
| A | WO 2018/123645 A1 (SONY CORPORATION) 05.07.2018<br>(2018-07-05), entire text, all drawings | 1-19 |
| A | WO 2017/164986 A1 (QUALCOMM INCORPORATED) 28.09.2017<br>(2017-09-28), entire text, all drawings | 1-19 |

☐ Further documents are listed in the continuation of Box C.     ☒ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 21.04.2020 | 28.04.2020 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**
Information on patent family members

International application No.

PCT/JP2020/006790

| | | |
|---|---|---|
| WO 2016/140060 A1 09.09.2016 | US 2018/0027257 A1 | |
| | paragraphs [0062]-[0224], | |
| | fig. 1-17 | |
| | EP 3267687 A1 | |
| | CN 107409232 A | |
| WO 2018/150933 A1 23.08.2018 | CN 110291788 A | |
| WO 2019/003953 A1 03.01.2019 | (Family: none) | |
| WO 2018/123645 A1 05.07.2018 | EP 3565244 A1 | |
| | entire text, all drawings | |
| | CN 110100435 A | |
| | KR 10-2019-0099411 A | |
| WO 2017/164986 A1 28.09.2017 | US 2017/0280126 A1 | |
| | CA 3015474 A1 | |
| | CN 108780567 A | |
| | KR 10-2018-0124046 A | |
| | EP 3433831 A1 | |
| | JP 2019-509690 A | |

Form PCT/ISA/210 (patent family annex) (January 2015)

**REFERENCES CITED IN THE DESCRIPTION**

**Patent documents cited in the description**

- WO 2018150933 A